(19) Europäisches Patentamt / European Patent Office / Office européen des brevets

(11) **EP 3 769 960 B1**

(12) **EUROPÄISCHE PATENTSCHRIFT**

(45) Veröffentlichungstag und Bekanntmachung des Hinweises auf die Patenterteilung:
**16.11.2022 Patentblatt 2022/46**

(21) Anmeldenummer: **20186696.9**

(22) Anmeldetag: **20.07.2020**

(51) Internationale Patentklassifikation (IPC):
**B32B 17/00** (2006.01)     **C03C 4/10** (2006.01)
**C03C 17/00** (2006.01)     **G01D 11/26** (2006.01)
**G01S 7/481** (2006.01)     **B32B 17/10** (2006.01)
**C03C 3/091** (2006.01)     **C03C 4/02** (2006.01)

(52) Gemeinsame Patentklassifikation (CPC):
**B32B 17/10; C03C 3/091; C03C 4/02; C03C 4/10; C03C 17/00; G01S 7/4813;** G01S 17/931

(54) **GEKRÜMMTES GLASFENSTER FÜR LIDAR-ANWENDUNGEN**

CURVED GLASS WINDOW FOR LIDAR APPLICATIONS

FENÊTRE VITRÉE INCURVÉE POUR APPLICATIONS LIDAR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.07.2019 EP 19187909**
**04.12.2019 EP 19213558**
**05.03.2020 EP 20161338**

(43) Veröffentlichungstag der Anmeldung:
**27.01.2021 Patentblatt 2021/04**

(73) Patentinhaber: **SCHOTT AG**
**55122 Mainz (DE)**

(72) Erfinder:
• **Schultz, Nikolaus**
**55270 Essenheim (DE)**
• **Eichhorn, Boris**
**55116 Mainz (DE)**
• **Lentes, Frank-Thomas**
**55411 Bingen (DE)**
• **Thomas, Jens Ulrich**
**55128 Mainz (DE)**
• **Plapper, Volker**
**55232 Alzey (DE)**

(74) Vertreter: **Fuchs Patentanwälte Partnerschaft mbB**
**Westhafenplatz 1**
**60327 Frankfurt am Main (DE)**

(56) Entgegenhaltungen:
WO-A1-2019/009336     WO-A1-2019/030106
DE-A1- 10 112 935     DE-U1-202016 008 528
US-A1- 2017 248 691

**Beschreibung**

Die vorliegende Erfindung betrifft ein Glasfenster für LiDAR-Systeme (LiDAR, englisch: Light Detection And Ranging). Ferner betrifft die Erfindung ein Verfahren zum Herstellen eines solchen Glasfensters.

**Hintergrund der Erfindung**

LiDAR (Abkürzung für "Light Detection And Ranging") oder auch LaDAR (Abkürzung für "Laser Detection And Ranging") ist eine Methode zur optischen Abstands- und Geschwindigkeitsmessung mittels Laserlicht, im Folgenden LIDAR genannt. Hierzu emittieren LiDAR-Systeme Laserstrahlen im nahen Infrarotspektrum (NIR), das heißt Laserstrahlen mit Wellenlängen über 780 nm, welche von Gegenständen in der Umgebung reflektiert werden und zumindest zum Teil wieder das LiDAR-System erreichen und dort detektiert werden. Aus dem Muster der reflektierten Strahlen kann das LiDAR-System Objekte erkennen und aus den Laufzeiten (Time of Flight) der Laserstrahlen die Entfernung der Objekte berechnen. Einige LiDAR-Systeme können auf der Grundlage von Phasenbeziehungen der emittierten und reflektierten Strahlen auch die Geschwindigkeiten von Objekten berechnen.

LiDAR Systeme bzw. LiDAR-Sensoren stellen derzeit eine wichtige Komponente zur Ermöglichung von autonomem Fahren dar. Weitere Anwendungen und Einsatzgebiete für LiDAR-Systeme sind zum Beispiel Robotertaxis, Roboter-LKWs, Roboterflugtaxis, Industrie- und Logistikroboter, Drohnen, Marine und Schiffe, Bergbau, Bau- und Bergbaumaschinen, Sicherheit und Militär, Weltraumsatelliten sowie das Erstellen von Topologie-/Landkarten aus der Luft, vom Land und Unterwasser, die Optimierung von Windturbinen, die Vermessung von Turbulenzen an Flughäfen, die Bestimmung von Flugzeugturbulenzen, etc.

Sämtliche LiDAR-Systeme benötigen wenigstens ein optisches Fenster, das zwischen den optoelektronischen Bauteilen des LiDAR-Systems und der Umgebung angeordnet ist und einen mechanischen Schutz gegenüber Umwelteinflüssen darstellt. Im Idealfall kann das optische Fenster sogar eine hermetische Dichtung zwischen den optoelektronischen Bauteilen des LiDAR-Systems und der Umgebung sicherstellen. Die unterschiedlichen LiDAR-Systeme können nach ihrer Bauart unterschieden werden, genauer gesagt hinsichtlich der Gestalt und Bauart der in den LiDAR-Systemen verwendeten Fenster. So sind einige LiDAR-Systeme mit planaren Fenstern versehen, um die sensiblen Bauteile des Systems zur Außenwelt hin abzugrenzen. Andere LiDAR-Systeme umfassen anstelle von planaren Fenstern gebogene bzw. gekrümmte Fenster. Verbreitet sind darüber hinaus rotierende LiDAR-Systeme (englisch "spinning LiDAR"), in denen Emitter und Detektor in einem typischerweise stationären Ringfenster rotieren.

In bekannten LiDAR-Systemen werden meist Fenster aus Polymermaterial eingesetzt, insbesondere für rotierende LiDAR-Systeme und sonstige LiDAR-Systeme mit gekrümmten Fenstern. Diese Polymerfenster werden meist mittels eines Formschmelz- oder Spritzgussverfahrens aus Materialien wie zum Beispiel Polycarbonat (PC) oder Polymethylmethacrylat (PMMA) hergestellt.

Allerdings haben LiDAR-Fenster aus Polymermaterialien Nachteile hinsichtlich ihrer Lebensdauer und Zuverlässigkeit.

So haben Polymerfenster häufig eine erhöhte Kratzeranfälligkeit, aufgrund ihrer geringen Kratzfestigkeit. Kratzer in den Polymerfenstern können im Betrieb des LiDAR-Systems entstehen durch (a) Umgebungseinflüsse aufgrund von kleinen auftreffenden Teilchen (z.B. Sand in der Luft oder Partikel von vorausfahrenden Autos), durch (b) mechanische Reinigung der Fenster und/oder durch (c) hartes Material oder Sand der bei Verwendung von Scheibenwischern über die Fensteroberfläche kratzt. Verkratzte Oberflächen, durch die zu reflektierendes und reflektiertes Licht hindurchtreten muss, beeinträchtigen die optische Leistung und Zuverlässigkeit des Systems enorm, insbesondere durch Wegnahme von Licht, Fehlleitung von Licht auf falsche Pixel, Streuung und Reduktion des Signal/Rausch-Verhältnisses.

Ein weiterer Nachteil von Polymerfenstern des Standes der Technik ist eine schlechte Haftung von zusätzlichen Schichten auf den Polymerfenstern. Häufig können LiDAR-Fenster zur Verbesserung bestimmter optischer, physikalischer und/oder mechanischer Eigenschaften mit zusätzlichen Schichten verbunden werden. Aufgrund der schlechten Hafteigenschaften der Polymerfenster kommt es häufig zum zumindest teilweisen Ablösen dieser Zusatzschichten, was die Signalstärken und somit die Signal/Rausch-Verhältnisse verringert. Zudem führen lokal abgelöste Beschichtungen zu ungewünschten Sprüngen in den Signalstärken. Die Hafteigenschaften werden weiter vermindert, wenn neben optisch wirkenden Beschichtungen weitere Schichten wie Kratzschutzschichten oder wasserabweisende Schichten aufgebracht werden.

Des Weiteren haben Polymerfenster eine geringe und häufig unzureichende Umweltstabilität. Polymere sind organische Materialien, die sich unter UV-Bestrahlung in der Regel verfärben (Braunfärbung). Eine solche Verfärbung führt zur Reduktion von Signalstärken. Zwar ist beispielsweise Polycarbonat vergleichsweise UV-stabil, dennoch beklagen Anwender häufig eine für LiDAR-Anwendungen zu geringe UV-Stabilität. Außerdem degradiert die Polymeroberfläche durch Witterungseinflüsse, beispielsweise durch Ablagerungen aus der Atmosphäre (nach einer chemischen Reaktion), was ebenfalls die Signalstärke verringert.

Zudem sind Polymerfenster nicht gasdicht, sodass sich in LiDAR-Systemen nach kurzer Zeit die Feuchtigkeit der umgebenden Atmosphäre einstellt, da Wasserdampf durch das Polymermaterial hindurch diffundiert. Feuchtigkeit im System kann zu Korrosion und mechanischem Versagen des Systems führen.

Ferner weisen Polymermaterialien eine vergleichsweise geringe Schmelztemperatur auf. Dies ist insbesondere für LiDAR-Systeme kritisch, in denen Heizschichten auf das Fenster aufgebracht werden, da hier die Gefahr des Schmelzens des Fensters bei Überhitzung der Heizschichten besteht. Ein Schmelzen des Fensters würde die Funktionsfähigkeit des gesamten LiDAR-Systems zerstören.

Aufgrund der vielfältigen Nachteile von Polymerfenstern gibt es den Ansatz Glasmaterialien für LiDAR-Fenster zu verwenden. Ein solches Fenster ist beispielsweise in den Dokumenten WO 2019/030106 A1 und WO 2019/009336 A1 offenbart. Allerdings sind weder die im Stand der Technik beschriebenen noch sonstige aus der Praxis bekannte Glasfenster tatsächlich für den Einsatz in LiDAR-Systemen geeignet, da es bei der Verwendung bisheriger Glasfenster aufgrund natürlicher Toleranzen zu zu großen Signalschwankungen kommt.

Das Dokument US 2017/248691 A1 offenbart eine Entfernungsmessvorrichtung zum Messen einer Entfernung unter Verwendung elektromagnetischer Strahlung. Die Vorrichtung umfasst ein Gehäuse mit einer Seitenwand, die in einer Ausführungsform aus Glas sein kann.

Das Dokument DE 20 2016 008528 U1 betrifft eine optische Komponente, die ausgebildet ist aus einem umgeformten Glassubstrat, das durch Umformen aus einem flachen Glassubstrat hergestellt ist. Die Vorder- und Rückseite des umgeformten Glassubstrats bildet jeweils eine offene, nicht-planare Oberfläche aus und zumindest eine der Oberflächen der Vorder- und Rückseite weist auf einer beliebigen Fläche mit einem Durchmesser von 20 mm maximal einen Fehler einer Größe von bis zu 0,4 mm auf.

Das Dokument DE 101 12 935 A1 betrifft eine Scheibenanordnung, insbesondere für eine Kraftfahrzeugseitenscheibe, mit wenigstens einem, in wenigstens einer Ebene gekrümmten flächigen, optisch transparenten Element. Ferner betrifft das Dokument ein Verfahren zum Vermindern eines bei Durchsicht in einem Blickrichtungsbereich durch eine Verbundscheibe auftretenden Doppelbildwinkels sowie die Verwendung einer dickenvariierten Verbundschicht in einer Verbundglasscheibe, um einen bei Durchsicht auftretenden Doppelbildwinkel, der wesentlich durch einen Glasschichtanteil bedingt ist, bezüglich der Verbundglasscheibe betragsmäßig zu verringern. Das transparente Element besitzt in seiner Flächenebene eine Keilform, wobei ein Keilwinkel in Richtung der durch eine Normale des Elementes und eine Blickrichtung eines Fahrzeuginsassen aufgespannten Ebene verläuft

Eine Aufgabe der vorliegenden Erfindung besteht darin, die Nachteile des Standes der Technik zu überwinden. Insbesondere besteht eine Aufgabe der Erfindung darin, ein Fenster für optische Systeme bereitzustellen, das die Nachteile des Standes der Technik überwindet und für die Verwendung in LiDAR-Systemen geeignet ist.

Diese Aufgaben werden gelöst durch ein Glasfenster gemäß Patentanspruch 1 und ein Verfahren gemäß Patentanspruch 16. Weiterbildungen und Ausführungsformen des Glasfensters und des Verfahrens sind Gegenstand der abhängigen Ansprüche und der nachstehenden Beschreibung.

## Beschreibung der Erfindung

Ein Aspekt der Erfindung betrifft ein Glasfenster für LiDAR-Systeme. Das Glasfenster kann also in einem LiDAR-System installierbar sein. Es versteht sich, dass das erfindungsgemäße Glasfenster auch für andere optische Instrumente geeignet sein kann, insbesondere für optische Instrumente mit Ringgeometrien. Das Glasfenster weist eine gekrümmte Form bzw. Fläche auf und unterscheidet sich somit von reinen Flachgläsern. Eine gekrümmte Form bedeutet, dass das Glasfenster eine dreidimensional gekrümmte Gestalt aufweist. Das Glasfenster kann um eine oder mehrere Biegeachsen, d.h. einachsig oder mehrachsig, gekrümmt sein. Beispielsweise kann das gekrümmte Glasfenster als Ring, Ringsegment (Kreisausschnitt oder -segment), Spiralsegment oder gekrümmte Freiformfläche ausgebildet oder asymmetrisch gekrümmt sein. Das Glasfenster kann eine oder mehrere Krümmungen aufweisen, wobei mehrere Krümmungen des Glasfensters gleich oder unterschiedlich sein können. Das Glasfenster kann in einem bestimmten Bereich gekrümmt sein und in einem anderen Bereich krümmungsfrei sein. Das Glasfenster kann in axialer Richtung krümmungsfrei, d.h. gerade ausgebildet, sein. "Glas" kann im Rahmen der vorliegenden Erfindung auch Glaskeramiken umfassen. In bevorzugten Ausführungsformen wird unter dem Begriff "Glas" allerdings ausschließlich amorphes Material verstanden.

Mindestens 50 % der Fläche des Glasfensters hat für Längenskalen zwischen 0,1 mm und 15 mm einen geometrischen Steigungsfehler $SE_G$, für den gilt:

$$SE_G < -2{,}3 \cdot 10^{-6} \cdot 2 \cdot R_0 \ [1/mm] + 7{,}3 \cdot 10^{-4};$$

vorzugsweise

$$SE_G < -1{,}1 \cdot 10^{-6} \cdot 2 \cdot R_0 \ [1/mm] + 3{,}6 \cdot 10^{-4};$$

bevorzugt

$$SE_G < -6{,}8 \cdot 10^{-7} \cdot 2 \cdot R_0 \ [1/mm] + 2{,}2 \cdot 10^{-4},$$

wobei $SE_G$ der dimensionslose geometrische Steigungsfehler (engl.: Slope Error) und $R_0$ der Sollkrümmungsradius (in mm) des Glasfensters ist. Insbesondere kann $R_0$ der Sollkrümmungsradius des Glasfensters an der Stelle des Glasfensters sein, an der der Steigungsfehler betrachtet wird. Als Referenzfläche zur Berechnung des Steigungsfehlers dient jeweils eine ideale Fläche an der betrachteten Stelle des Glasfensters. Der Sollkrümmungsradius $R_0$ kann insbesondere der Sollkrümmungsradius bezogen auf eine Außenfläche des Glasfensters sein, also ein Sollkrümmungsaußenradius.

Die erfindungsgemäße Bedingung gibt erstmals konkrete einzuhaltende Werte für den Steigungsfehler in Abhängigkeit des Sollkrümmungsradius an. Der Steigungsfehler kann auch als Tangentenfehler bezeichnet werden und beschreibt eine lokale Steigungsabweichung von einer idealen Sollkrümmung bzw. eine Änderung der Wanddicke über einen Längenabschnitt, beispielsweise einen Umfangsabschnitt (Wanddickenschwankung), wobei der erfindungsgemäße Steigungsfehlerwert unabhängig von der Orientierung (axial oder tangential) der Strukturen ist. Als Referenzfläche wird bei der Betrachtung und Bestimmung des Steigungsfehlers jeweils die ideale Fläche an der betreffenden Stelle des Glasfensters verwendet. Im Falle eines Glasfensters in Form eines Glasrings wäre dies beispielsweise ein mathematisch perfekter Ring mit durchgehend identischem Sollkrümmungsradius.

Die vorliegende Erfindung gibt erstmals eine klare Handlungsanweisung zur Bereitstellung von Glasfenstern mit konkreten Eigenschaften und einzustellenden Toleranzen hinsichtlich der Oberflächenqualität und -güte, die erforderlich sind, um einen Einsatz des Glasfensters für LiDAR-Anwendungen zu ermöglichen. Insbesondere gibt die Erfindung durch die spezifizierte Bedingung explizite Grenzen für den einzuhaltenden Steigungsfehler in Abhängigkeit eines Sollkrümmungsradius des Glasfensters an.

Bisher waren Glasfenster aufgrund natürlicher Toleranzen und dadurch hervorgerufener zu großer Signalschwankungen oftmals nicht für LiDAR-Anwendungen geeignet. In diesem Zusammenhang ist zu erwähnen, dass die Quantifizierung der hier definierten Parameter, Toleranzen und Eigenschaften stark von einer Vielzahl von Einflussfaktoren abhängt, wie beispielsweise den von der jeweiligen Anwendung geforderten Abbildungseigenschaften, den in der Anwendung üblicherweise verwendeten Wellenlängen, den exakten Geometrien der optischen Elemente, der optoelektronischen Komponenten und der Analyse-Software, etc. Die Festlegung von Obergrenzen für ein LiDAR-System basiert daher auf einer der Erfindung zugrunde liegenden substanziellen Technologieentwicklung durch die Erfinder.

Hierbei haben die Erfinder herausgefunden, dass das Glasfenster für eine Eignung in LiDAR-Systemen überraschender Weise bzgl. vieler Parameter relativ große Toleranzen haben darf. Jedoch wurde herausgefunden, dass für eine optimale Systemleistung und eine geeignete Signalqualität vor allem der Parameter des geometrischen und vorzugsweise des optischen Steigungsfehlers relevant ist. Der Steigungsfehler, der das dimensionslose Verhältnis der Wanddickenänderung über eine Länge berücksichtigt, ist erfindungsgemäß in den vorstehend definierten Toleranzen bzw. Werten zu halten. In diesem Zusammenhang haben die Erfinder insbesondere herausgefunden, innerhalb welcher Bereiche der Steigungsfehler in Abhängigkeit einer Sollkrümmung des Glasfensters bereitzustellen ist, um den Anforderungen von LiDAR-Systemen zu genügen.

Um ein erfindungsgemäßes Glasfenster bereitzustellen bzw. die erforderlichen Werte des Steigungsfehlers zu erreichen, kann das Glasfenster beispielsweise mittels eines Schleif- und oder Polierprozesses nachbearbeitet werden. Ferner haben die Erfinder erkannt, dass insbesondere Wanddickenschwankungen auf Längen von $\Delta L = 0{,}1$ mm bis 15 mm, für die zu erreichende Eignung des Glasfensters für LiDAR-Systeme relevant ist. Kürzerwellige Schwankungen führen physikalisch zu Streueffekten und werden typischer Weise über die Rauheit beschrieben und mittels Rauheitsparametern spezifiziert, längerwellige Schwankungen werden von dem LiDAR-System weniger stark wahrgenommen, da sie in die Größenordnung der optischen Apertur fallen. Sie bewirken ggf. eine Änderung zwischen der wahren und einer scheinbaren Winkelrichtung. Ein Glasfenster mit den erfindungsgemäßen Werten für den geometrischen und vorzugsweise den optischen Steigungsfehler für Längenskalen zwischen 0,1 mm und 15 mm, ermöglicht es, beim Einsatz des Glasfensters in LiDAR-Systemen eine Signalschwankung zu minimieren und in einer als ausreichend angesehenen Toleranzbreite von +/- 10 % zu halten. Der Einsatz eines Glasfensters mit den erfindungsgemäßen Werten für den geometrischen und vorzugsweise den optischen Steigungsfehler für Längenskalen zwischen 0,1 mm und 15 mm, ermöglicht relative Standardabweichungen des LiDAR-Signals vom Mittelwert im Verhältnis zum Mittelwert von weniger als 10%, vorzugsweise weniger als 7%, bevorzugt weniger als 6%, noch weiter bevorzugt weniger als 4% Die Standardabweichung kann anhand von n Messungen der normierten Signalstärke des LiDAR-Signals bei verschiedenen Fensterpositionen ermittelt werden, bei Fenstern in Ringform insbesondere bei verschiedenen Rotationswinkeln des Fensters. Die Standardabweichung s kann wie folgt berechnet werden, wobei $\chi_i$ die einzelnen Messwerte sind und $\chi$

deren Mittelwert. n kann bevorzugt mindestens 5, oder mindestens 7 sein. In einer Ausführungsform ist n = 9.

$$\tilde{s} := +\sqrt{\frac{1}{n}\sum_{i=1}^{n}\left(x_i - \overline{x}\right)^2}$$

Der geometrische Steigungsfehler kann mittels Weißlichtinterferometrie gemessen werden.

In einer nicht zur Erfindung gehörenden Ausführungsform kann das Glasfenster einen Sollkrümmungsradius von $R_0$ = 42,5 mm haben. Zum Beispiel kann das Glasfenster einen Sollaußendurchmesser OD = 85 mm haben. In diesem Fall kann 50 % der Fläche des Glasfensters für Längenskalen zwischen 0,1 mm und 15 mm, einen geometrischen Steigungsfehler $SE_G$ von weniger als 0,0005345 haben, vorzugsweise von weniger als 0,0002665, bevorzugt von weniger als 0,0001622. Das Glasfenster kann in dieser Ausführungsform beispielsweise ein Glasring sein.

In einer Ausführungsform kann das Glasfenster einen Sollkrümmungsradius von $R_0$ = 67,5 mm haben. Zum Beispiel kann das Glasfenster einen Sollaußendurchmesser OD = 135 mm haben. In diesem Fall kann 50 % der Fläche des Glasfensters für Längenskalen zwischen 0,1 mm und 15 mm, einen geometrischen Steigungsfehler $SE_G$ von weniger als 0,0004195 haben, vorzugsweise von weniger als 0,0002115, bevorzugt von weniger als 0,0001282. Das Glasfenster kann in dieser Ausführungsform beispielsweise ein Glasring sein.

In einer Weiterbildung kann mindestens 50 % der Fläche des Glasfensters für Längenskalen zwischen 0,1 mm und 15 mm eine Untergrenze für den geometrischen Steigungsfehler $SE_G$ haben. So kann mindestens 50 % der Fläche des Glasfensters für Längenskalen zwischen 0,1 mm und 15 mm einen geometrischen Steigungsfehler $SE_G$ haben, für den gilt:

$$SE_G > -6{,}8 \cdot 10^{-8} \cdot 2 \cdot R_0 \ [1/mm] + 2{,}2 \cdot 10^{-5};$$

vorzugsweise

$$SE_G > -1{,}1 \cdot 10^{-7} \cdot 2 \cdot R_0 \ [1/mm] + 3{,}6 \cdot 10^{-5};$$

bevorzugt

$$SE_G > -2{,}3 \cdot 10^{-7} \cdot 2 \cdot R_0 \ [1/mm] + 7{,}3 \cdot 10^{-5},$$

wobei $SE_G$ der dimensionslose geometrische Steigungsfehler und $R_0$ der Sollkrümmungsradius (in mm) des Glasfensters ist. Insbesondere kann $R_0$ der Sollkrümmungsradius des Glasfensters an der Stelle des Glasfensters sein, an der der Steigungsfehler betrachtet wird.

In einer nicht zur Erfindung gehörenden Ausführungsform kann das Glasfenster einen Sollkrümmungsradius von $R_0$ = 42,5 mm haben. Zum Beispiel kann das Glasfenster einen Sollaußendurchmesser OD = 85 mm haben. In diesem Fall kann 50 % der Fläche des Glasfensters für Längenskalen zwischen 0,1 mm und 15 mm, einen geometrischen Steigungsfehler $SE_G$ von wenigstens 0,0000162 haben, vorzugsweise von wenigstens 0,0000267, bevorzugt von wenigstens 0,0000535. Das Glasfenster kann in dieser Ausführungsform beispielsweise ein Glasring sein.

In einer Ausführungsform kann das Glasfenster einen Sollkrümmungsradius von $R_0$ = 67,5 mm haben. Zum Beispiel kann das Glasfenster einen Sollaußendurchmesser OD = 135 mm haben. In diesem Fall kann 50 % der Fläche des Glasfensters für Längenskalen zwischen 0,1 mm und 15 mm, einen geometrischen Steigungsfehler $SE_G$ von wenigstens 0,0000128 haben, vorzugsweise von wenigstens 0,0000212, bevorzugt von weniger als 0,0000420. Das Glasfenster kann in dieser Ausführungsform beispielsweise ein Glasring sein.

In einer Weiterbildung kann mindestens 50 % der Fläche des Glasfensters für Längenskalen zwischen 0,1 mm und 15 mm einen geometrischen Steigungsfehler $SE_G$ haben, für den gilt:

$$-6{,}8 \cdot 10^{-8} \cdot 2 \cdot R_0 \ [1/mm] + 2{,}2 \cdot 10^{-5} < SE_G < -2{,}3 \cdot 10^{-6} \cdot 2 \cdot R_0 \ [1/mm] + 7{,}3 \cdot 10^{-4};$$

vorzugsweise

$$-1{,}1 \cdot 10^{-7} \cdot 2 \cdot R_0 \ [1/mm] + 3{,}6 \cdot 10^{-5} < SE_G < -1{,}1 \cdot 10^{-6} \cdot 2 \cdot R_0 \ [1/mm] + 3{,}6 \cdot 10^{-4};$$

bevorzugt

$$-2{,}3 \cdot 10^{-7} \cdot 2 \cdot R_0 \ [1/mm] + 7{,}3 \cdot 10^{-5} < SE_G < -6{,}8 \cdot 10^{-7} \cdot 2 \cdot R_0 \ [1/mm] + 2{,}2 \cdot 10^{-4},$$

wobei $SE_G$ der dimensionslose geometrische Steigungsfehler und $R_0$ der Sollkrümmungsradius (in mm) des Glasfensters ist. Insbesondere kann $R_0$ der Sollkrümmungsradius des Glasfensters an der Stelle des Glasfensters sein, an der der Steigungsfehler betrachtet wird.

In einer Weiterbildung kann mindestens 50 % der Fläche des Glasfensters für Längenskalen zwischen 0,1 mm und 15 mm einen geometrischen Steigungsfehler von weniger als 0,00050 haben, vorzugsweise weniger als 0,00040, bevorzugt weniger als 0,00035, weiter bevorzugt weniger als 0,00025 (= $2.5 \cdot 10^{-4}$). Insbesondere kann mindestens 50 % der Fläche des Glasfensters für Längenskalen zwischen 0,1 mm und 15 mm einen geometrischen Steigungsfehler von wenigstens 0,00001, vorzugsweise wenigstens 0,000025, bevorzugt wenigstens 0,00004 haben. Beispielsweise kann mindestens 50 % der Fläche des Glasfensters für Längenskalen zwischen 0,1 mm und 15 mm einen geometrischen Steigungsfehler zwischen 0,00001 und 0,00040, vorzugsweise zwischen 0,000025 und 0,00035, bevorzugt zwischen 0,00005 und 0,00025 haben.

Anders ausgedrückt kann für den geometrischen Steigungsfehler in mindestens 50 % der Fläche des Glasfensters für Längenskalen zwischen 0,1 mm und 15 mm folgender Zusammenhang gelten:

$$0 < (\Delta WT)/\Delta L < X,$$

wobei WT (engl.: wall thickness) die Wandstärke in mm und L eine Länge in mm des Glasfensters bezeichnen und X eine Variable für die vorstehend definierten Werte ist. Insbesondere kann $X = 2.5 \cdot 10^{-4}$ sein.

In einer Weiterbildung kann mindestens 50 % der Fläche des Glasfensters für Längenskalen zwischen 0,1 mm und 15 mm einen optischen Steigungsfehler SEo haben, für den gilt:

$$SE_O < -1{,}1 \cdot 10^{-6} \cdot 2 \cdot R_0 \ [1/mm] + 3{,}6 \cdot 10^{-4};$$

vorzugsweise

$$SE_O < -5{,}6 \cdot 10^{-7} \cdot 2 \cdot R_0 \ [1/mm] + 1{,}8 \cdot 10^{-4};$$

bevorzugt

$$SE_O < -3{,}4 \cdot 10^{-7} \cdot 2 \cdot R_0 \ [1/mm] + 1{,}1 \cdot 10^{-4},$$

wobei SEo der dimensionslose optische Steigungsfehler und $R_0$ der Sollkrümmungsradius (in mm) des Glasfensters ist. Insbesondere kann $R_0$ der Sollkrümmungsradius des Glasfensters an der Stelle des Glasfensters sein, an der der Steigungsfehler betrachtet wird.

In einer nicht zur Erfindung gehörenden Ausführungsform kann das Glasfenster einen Sollkrümmungsradius von $R_0 = 42{,}5$ mm haben. Zum Beispiel kann das Glasfenster einen Sollaußendurchmesser OD = 85 mm haben. In diesem Fall kann 50 % der Fläche des Glasfensters für Längenskalen zwischen 0,1 mm und 15 mm einen optischen Steigungsfehler SEo von weniger als 0,000267 haben, vorzugsweise von weniger als 0,000133, bevorzugt von weniger als 0,000081. Das Glasfenster kann in dieser Ausführungsform beispielsweise ein Glasring sein.

In einer Ausführungsform kann das Glasfenster einen Sollkrümmungsradius von $R_0 = 67{,}5$ mm haben. Zum Beispiel kann das Glasfenster einen Sollaußendurchmesser OD = 135 mm haben. In diesem Fall kann 50 % der Fläche des Glasfensters für Längenskalen zwischen 0,1 mm und 15 mm einen optischen Steigungsfehler SEo von weniger als 0,000212 haben, vorzugsweise von weniger als 0,000104, bevorzugt von weniger als 0,000064. Das Glasfenster kann in dieser Ausführungsform beispielsweise ein Glasring sein.

In einer Weiterbildung kann mindestens 50 % der Fläche des Glasfensters für Längenskalen zwischen 0,1 mm und 15 mm eine Untergrenze für den optischen Steigungsfehler SEo haben. So kann mindestens 50 % der Fläche des Glasfensters für Längenskalen zwischen 0,1 mm und 15 mm einen optischen Steigungsfehler SEo haben, für den gilt:

$$SE_O > -3{,}4 \cdot 10^{-8} \cdot 2 \cdot R_0 \ [1/mm] + 1{,}1 \cdot 10^{-5};$$

vorzugsweise

$$SE_O > -5{,}6 \cdot 10^{-8} \cdot 2 \cdot R_0 \ [1/mm] + 1{,}8 \cdot 10^{-5};$$

bevorzugt

$$SE_O > -1{,}1 \cdot 10^{-7} \cdot 2 \cdot R_0 \ [1/mm] + 3{,}6 \cdot 10^{-5},$$

wobei SEo der dimensionslose optische Steigungsfehler und $R_0$ der Sollkrümmungsradius (in mm) des Glasfensters ist. Insbesondere kann $R_0$ der Sollkrümmungsradius des Glasfensters an der Stelle des Glasfensters sein, an der der Steigungsfehler betrachtet wird.

In einer nicht zur Erfindung gehörenden Ausführungsform kann das Glasfenster einen Sollkrümmungsradius von $R_0$ = 42,5 mm haben. Zum Beispiel kann das Glasfenster einen Sollaußendurchmesser OD = 85 mm haben. In diesem Fall kann 50 % der Fläche des Glasfensters für Längenskalen zwischen 0,1 mm und 15 mm einen optischen Steigungsfehler SEo von wenigstens 0,000008 haben, vorzugsweise von wenigstens 0,000013, bevorzugt von wenigstens 0,000027. Das Glasfenster kann in dieser Ausführungsform beispielsweise ein Glasring sein.

In einer nicht zur Erfindung gehörenden Ausführungsform kann das Glasfenster einen Sollkrümmungsradius von $R_0$ = 67,5 mm haben. Zum Beispiel kann das Glasfenster einen Sollaußendurchmesser OD = 135 mm haben. In diesem Fall kann 50 % der Fläche des Glasfensters für Längenskalen zwischen 0,1 mm und 15 mm einen optischen Steigungsfehler SEo von wenigstens 0,000006 haben, vorzugsweise von wenigstens 0,000010, bevorzugt von wenigstens 0,000021. Das Glasfenster kann in dieser Ausführungsform beispielsweise ein Glasring sein.

In einer Weiterbildung kann mindestens 50 % der Fläche des Glasfensters für Längenskalen zwischen 0,1 mm und 15 mm einen optischen Steigungsfehler SEo haben, für den gilt:

$$-3{,}4 \cdot 10^{-8} \cdot 2 \cdot R_0 \ [1/mm] + 1{,}1 \cdot 10^{-5} < SE_O < -1{,}1 \cdot 10^{-6} \cdot 2 \cdot R_0 \ [1/mm] + 3{,}6 \cdot 10^{-4};$$

vorzugsweise

$$-5{,}6 \cdot 10^{-8} \cdot 2 \cdot R_0 \ [1/mm] + 1{,}8 \cdot 10^{-5} < SE_O < -5{,}6 \cdot 10^{-7} \cdot 2 \cdot R_0 \ [1/mm] + 1{,}8 \cdot 10^{-4};$$

bevorzugt

$$-1{,}1 \cdot 10^{-7} \cdot 2 \cdot R_0 \ [1/mm] + 3{,}6 \cdot 10^{-5} < SE_O < -3{,}4 \cdot 10^{-7} \cdot 2 \cdot R_0 \ [1/mm] + 1{,}1 \cdot 10^{-4},$$

wobei SEo der dimensionslose optische Steigungsfehler und $R_0$ der Sollkrümmungsradius (in mm) des Glasfensters ist. Insbesondere kann $R_0$ der Sollkrümmungsradius des Glasfensters an der Stelle des Glasfensters sein, an der der Steigungsfehler betrachtet wird.

In einer Weiterbildung kann mindestens 50 % der Fläche des Glasfensters für Längenskalen zwischen 0,1 mm und 15 mm einen optischen Steigungsfehler von weniger als 0,00025, vorzugsweise weniger als 0,00020, bevorzugt weniger als 0,00018, weiter bevorzugt weniger als 0,00013 (= $1.3 \cdot 10^{-4}$) haben. Insbesondere kann mindestens 50 % der Fläche des Glasfensters für Längenskalen zwischen 0,1 mm und 15 mm einen optischen Steigungsfehler von wenigstens 0,000005, vorzugsweise wenigstens 0,000013, bevorzugt wenigstens 0,00002 haben. Beispielsweise kann mindestens 50 % der Fläche des Glasfensters für Längenskalen zwischen 0,1 mm und 15 mm einen optischen Steigungsfehler zwischen 0,000005 und 0,00025, vorzugsweise zwischen 0,000013 und 0,00020, bevorzugt zwischen 0,00002 und 0,00013 haben.

Anders ausgedrückt kann für den optischen Steigungsfehler in mindestens 50 % der Fläche des Glasfensters für Längenskalen zwischen 0,1 mm und 15 mm folgender Zusammenhang gelten:

$$0 < (n-1)*(\Delta WT)/\Delta L < X,$$

wobei WT (engl.: wall thickness) die Wandstärke in mm, L eine Länge in mm und n den Brechungsindex des Glasfensters für eine Laserwellenlänge von 905 nm bezeichnen und X eine Variable für die vorstehend definierten Werte ist. Insbesondere kann $X = 1.3 \cdot 10^{-4}$ sein.

Der wesentliche Unterschied zwischen dem geometrischen Steigungsfehler und dem optischen Steigungsfehler ist, dass der geometrische Steigungsfehler auf eine geometrische Wanddickenänderung (als Summe beider Seiten) im Verhältnis zur betrachteten Länge abstellt. Eine Änderung der Wanddicke führt zu einer veränderten Transmission der Wellenfront, was durch den optischen Steigungsfehler beschrieben werden kann, der neben den geometrischen Parametern auch den Brechungsindex des verwendeten Materials berücksichtigt. Insbesondere können beide einander entgegengesetzte Seiten bzw. Oberflächen des Glasfensters die vorstehend definierten Werte des optischen Steigungsfehlers aufweisen.

Vorzugsweise weist das Glasfenster diesen oder einen geringeren als diesen maximal tolerierten geometrischen Steigungsfehler und/oder diesen oder einen geringeren als diesen maximal tolerierten optischen Steigungsfehler in mindestens 60 % seiner Fläche auf, bevorzugt mindestens 70 %, weiter bevorzugt mindestens 80 %, noch weiter bevorzugt mindestens 90 %. Mit anderen Worten weist das Glasfenster die über den maximalen Steigungsfehler beschriebene hohe Oberflächenqualität und -güte in ausreichendem Maße in zumindest dem Teil des Glasfensters auf, der bei der Verwendung des Glasfensters in einem LiDAR-System von dem System aktiv genutzt wird. Dies ist insbesondere bei LiDAR-Systemen der Teil des Glasfensters, der von einem Laserlicht (emittiert und reflektiert) durchtreten wird.

In einer Ausführungsform der Erfindung kann das Glasfenster eine gekrümmte Form haben und in einer Fläche des Glasfensters von mindestens 100 mm$^2$ für Längenskalen zwischen 0,1 mm und 15 mm einen geometrischen Steigungsfehler haben, für den gilt:

$$SE_G < -2,3 \cdot 10^{-6} \cdot 2 \cdot R_0 \ [1/mm] + 7,3 \cdot 10^{-4};$$

vorzugsweise

$$SE_G < -1,1 \cdot 10^{-6} \cdot 2 \cdot R_0 \ [1/mm] + 3,6 \cdot 10^{-4};$$

bevorzugt

$$SE_G < -6,8 \cdot 10^{-7} \cdot 2 \cdot R_0 \ [1/mm] + 2,2 \cdot 10^{-4},$$

wobei $SE_G$ der dimensionslose geometrische Steigungsfehler und $R_0$ der Sollkrümmungsradius (in mm) des Glasfensters ist. Insbesondere kann $R_0$ der Sollkrümmungsradius des Glasfensters an der Stelle des Glasfensters sein, an der der Steigungsfehler betrachtet wird.

In einer Ausführungsform der Erfindung kann das Glasfenster eine gekrümmte Form haben und in einer Fläche des Glasfensters von mindestens 100 mm$^2$ für Längenskalen zwischen 0,1 mm und 15 mm einen geometrischen Steigungsfehler von weniger als 0,00050 aufweisen, vorzugsweise weniger als 0,00040, bevorzugt weniger als 0,00035, weiter bevorzugt weniger als 0,00025 ($= 2.5 \cdot 10^{-4}$). In einer Ausführungsform der Erfindung kann das Glasfenster eine gekrümmte Form haben und in einer Fläche des Glasfensters von mindestens 100 mm$^2$ für Längenskalen zwischen 0,1 mm und 15 mm einen geometrischen Steigungsfehler haben, für den gilt:

$$SE_G > -6,8 \cdot 10^{-8} \cdot 2 \cdot R_0 \ [1/mm] + 2,2 \cdot 10^{-5};$$

vorzugsweise

$$SE_G > -1,1 \cdot 10^{-7} \cdot 2 \cdot R_0 \ [1/mm] + 3,6 \cdot 10^{-5};$$

bevorzugt

$$SE_G > -2,3 \cdot 10^{-7} \cdot 2 \cdot R_0 \,[1/mm] + 7,3 \cdot 10^{-5},$$

wobei $SE_G$ der dimensionslose geometrische Steigungsfehler und $R_0$ der Sollkrümmungsradius (in mm) des Glasfensters ist. Insbesondere kann $R_0$ der Sollkrümmungsradius des Glasfensters an der Stelle des Glasfensters sein, an der der Steigungsfehler betrachtet wird.

In einer Weiterbildung kann das Glasfenster eine gekrümmte Form haben und in einer Fläche des Glasfensters von mindestens 100 mm$^2$ für Längenskalen zwischen 0,1 mm und 15 mm einen geometrischen Steigungsfehler haben, für den gilt:

$$-6,8 \cdot 10^{-8} \cdot 2 \cdot R_0 \,[1/mm] + 2,2 \cdot 10^{-5} < SE_G < -2,3 \cdot 10^{-6} \cdot 2 \cdot R_0 \,[1/mm] + 7,3 \cdot 10^{-4};$$

vorzugsweise

$$-1,1 \cdot 10^{-7} \cdot 2 \cdot R_0 \,[1/mm] + 3,6 \cdot 10^{-5} < SE_G < -1,1 \cdot 10^{-6} \cdot 2 \cdot R_0 \,[1/mm] + 3,6 \cdot 10^{-4};$$

bevorzugt

$$-2,3 \cdot 10^{-7} \cdot 2 \cdot R_0 \,[1/mm] + 7,3 \cdot 10^{-5} < SE_G < -6,8 \cdot 10^{-7} \cdot 2 \cdot R_0 \,[1/mm] + 2,2 \cdot 10^{-4},$$

wobei $SE_G$ der dimensionslose geometrische Steigungsfehler und $R_0$ der Sollkrümmungsradius (in mm) des Glasfensters ist. Insbesondere kann $R_0$ der Sollkrümmungsradius des Glasfensters an der Stelle des Glasfensters sein, an der der Steigungsfehler betrachtet wird.

In einer Ausführungsform der Erfindung kann das Glasfenster eine gekrümmte Form haben und in einer Fläche des Glasfensters von mindestens 100 mm$^2$ für Längenskalen zwischen 0,1 mm und 15 mm einen optischen Steigungsfehler $SE_o$ haben, für den gilt:

$$SE_O < -1,1 \cdot 10^{-6} \cdot 2 \cdot R_0 \,[1/mm] + 3,6 \cdot 10^{-4};$$

vorzugsweise

$$SE_O < -5,6 \cdot 10^{-7} \cdot 2 \cdot R_0 \,[1/mm] + 1,8 \cdot 10^{-4};$$

bevorzugt

$$SE_O < -3,4 \cdot 10^{-7} \cdot 2 \cdot R_0 \,[1/mm] + 1,1 \cdot 10^{-4},$$

wobei $SE_o$ der dimensionslose optische Steigungsfehler und $R_0$ der Sollkrümmungsradius (in mm) des Glasfensters ist. Insbesondere kann $R_0$ der Sollkrümmungsradius des Glasfensters an der Stelle des Glasfensters sein, an der der Steigungsfehler betrachtet wird.

In einer Ausführungsform der Erfindung kann das Glasfenster eine gekrümmte Form haben und in einer Fläche des Glasfensters von mindestens 100 mm$^2$ für Längenskalen zwischen 0,1 mm und 15 mm einen optischen Steigungsfehler $SE_o$ haben, für den gilt:

$$SE_O > -3,4 \cdot 10^{-8} \cdot 2 \cdot R_0 \,[1/mm] + 1,1 \cdot 10^{-5};$$

vorzugsweise

$$SE_O > -5,6 \cdot 10^{-8} \cdot 2 \cdot R_0 \,[1/mm] + 1,8 \cdot 10^{-5};$$

bevorzugt

$$SE_O > -1{,}1 \cdot 10^{-7} \cdot 2 \cdot R_0 \ [1/mm] + 3{,}6 \cdot 10^{-5},$$

wobei SEo der dimensionslose optische Steigungsfehler und $R_0$ der Sollkrümmungsradius (in mm) des Glasfensters ist. Insbesondere kann $R_0$ der Sollkrümmungsradius des Glasfensters an der Stelle des Glasfensters sein, an der der Steigungsfehler betrachtet wird.

In einer Ausführungsform der Erfindung kann das Glasfenster eine gekrümmte Form haben und in einer Fläche des Glasfensters von mindestens 100 mm$^2$ für Längenskalen zwischen 0,1 mm und 15 mm einen optischen Steigungsfehler SEo haben, für den gilt:

$$-3{,}4 \cdot 10^{-8} \cdot 2 \cdot R_0 \ [1/mm] + 1{,}1 \cdot 10^{-5} < SE_O < -1{,}1 \cdot 10^{-6} \cdot 2 \cdot R_0 \ [1/mm] + 3{,}6 \cdot 10^{-4};$$

vorzugsweise

$$-5{,}6 \cdot 10^{-8} \cdot 2 \cdot R_0 \ [1/mm] + 1{,}8 \cdot 10^{-5} < SE_O < -5{,}6 \cdot 10^{-7} \cdot 2 \cdot R_0 \ [1/mm] + 1{,}8 \cdot 10^{-4};$$

bevorzugt

$$-1{,}1 \cdot 10^{-7} \cdot 2 \cdot R_0 \ [1/mm] + 3{,}6 \cdot 10^{-5} < SE_O < -3{,}4 \cdot 10^{-7} \cdot 2 \cdot R_0 \ [1/mm] + 1{,}1 \cdot 10^{-4},$$

wobei SEo der dimensionslose optische Steigungsfehler und $R_0$ der Sollkrümmungsradius (in mm) des Glasfensters ist. Insbesondere kann $R_0$ der Sollkrümmungsradius des Glasfensters an der Stelle des Glasfensters sein, an der der Steigungsfehler betrachtet wird.

Insbesondere kann eine Fläche des Glasfensters von mindestens 100 mm$^2$ für Längenskalen zwischen 0,1 mm und 15 mm einen geometrischen Steigungsfehler von wenigstens 0,00001, vorzugsweise wenigstens 0,000025, bevorzugt wenigstens 0,00004 haben. Beispielsweise kann eine Fläche des Glasfensters von mindestens 100 mm$^2$ für Längenskalen zwischen 0,1 mm und 15 mm einen geometrischen Steigungsfehler zwischen 0,00001 und 0,00040, vorzugsweise zwischen 0,000025 und 0,00035, bevorzugt zwischen 0,00005 und 0,00025 haben.

Vorzugsweise weist das Glasfenster den oder einen geringeren als den maximal tolerierten geometrischen Steigungsfehler und/oder den oder einen geringeren als den maximal tolerierten optischen Steigungsfehler in einer Fläche von mindestens 100 mm$^2$ auf, bevorzugt mindestens 500 mm$^2$, weiter bevorzugt mindestens 1000 mm$^2$, noch weiter bevorzugt mindestens 1 m$^2$.

Beispielsweise weist das Glasfenster den oder einen geringeren als den maximal tolerierten geometrischen Steigungsfehler und/oder den oder einen geringeren als den maximal tolerierten optischen Steigungsfehler in einer Fläche von 250000 mm$^2$ oder weniger auf, vorzugsweise 30000 mm$^2$ oder weniger, weiter bevorzugt 1500 mm$^2$ oder weniger.

Insbesondere weist das Glasfenster den oder einen geringeren als den maximal tolerierten geometrischen Steigungsfehler und/oder den oder einen geringeren als den maximal tolerierten optischen Steigungsfehler in einer Fläche zwischen 100 mm$^2$ und 250000 mm$^2$ auf, vorzugsweise zwischen 500 mm$^2$ und 30000 mm$^2$, insbesondere zwischen 1000 mm$^2$ und 1500 mm$^2$.

Mit anderen Worten weist das Glasfenster die über den maximalen Steigungsfehler beschriebene hohe Oberflächenqualität und -güte in ausreichendem Maße in zumindest dem Teil des Glasfensters auf, der bei der Verwendung des Glasfensters in einem LiDAR-System von dem System aktiv genutzt wird. Dies ist insbesondere bei LiDAR-Systemen der Teil des Glasfensters, der von einem Laserlicht (emittiert und reflektiert) durchtreten wird.

In einer Weiterbildung kann mindestens 50 % der Fläche des Glasfensters für Längenskalen über 15 mm, insbesondere für Längenskalen zwischen 15 mm und der Hälfte des Umfangs (U/2) in mm eines ringförmigen Glasfensters, einen geometrischen Steigungsfehler $SE_G$ haben, für den gilt:

$$SE_G < -4{,}8 \cdot 10^{-5} \cdot 2 \cdot R_0 \ [1/mm] + 9{,}8 \cdot 10^{-3};$$

vorzugsweise

$$SE_G < -2{,}4 \cdot 10^{-5} \cdot 2 \cdot R_0 \ [1/mm] + 4{,}9 \cdot 10^{-3};$$

bevorzugt

$$SE_G < -9{,}7 \cdot 10^{-6} \cdot 2 \cdot R_0 \ [1/mm] + 2{,}0 \cdot 10^{-3},$$

wobei $SE_G$ der dimensionslose geometrische Steigungsfehler und $R_0$ der Sollkrümmungsradius (in mm) des Glasfensters ist. Insbesondere kann $R_0$ der Sollkrümmungsradius des Glasfensters an der Stelle des Glasfensters sein, an der der Steigungsfehler betrachtet wird.

In einer nicht zur Erfindung gehörenden Ausführungsform kann das Glasfenster einen Sollkrümmungsradius von $R_0$ = 42,5 mm haben. Zum Beispiel kann das Glasfenster einen Sollaußendurchmesser OD = 85 mm haben. In diesem Fall kann 50 % der Fläche des Glasfensters für Längenskalen über 15 mm, insbesondere für Längenskalen zwischen 15 mm und der Hälfte des Umfangs (U/2) in mm eines ringförmigen Glasfensters, einen geometrischen Steigungsfehler $SE_G$ von weniger als 0,0057 haben, vorzugsweise von weniger als 0,0029, bevorzugt von weniger als 0,0011. Das Glasfenster kann in dieser Ausführungsform beispielsweise ein Glasring sein.

In einer Weiterbildung kann der geometrische Steigungsfehler eine Untergrenze haben. So kann mindestens 50 % der Fläche des Glasfensters für Längenskalen über 15 mm, insbesondere für Längenskalen zwischen 15 mm und der Hälfte des Umfangs (U/2) in mm eines ringförmigen Glasfensters, einen geometrischen Steigungsfehler $SE_G$ haben, für den gilt:

$$SE_G > -9{,}7 \cdot 10^{-7} \cdot 2 \cdot R_0 \ [1/mm] + 2{,}0 \cdot 10^{-4};$$

vorzugsweise

$$SE_G > -2{,}4 \cdot 10^{-6} \cdot 2 \cdot R_0 \ [1/mm] + 4{,}9 \cdot 10^{-4};$$

bevorzugt

$$SE_G > -4{,}8 \cdot 10^{-6} \cdot 2 \cdot R_0 \ [1/mm] + 9{,}8 \cdot 10^{-4},$$

wobei $SE_G$ der dimensionslose geometrische Steigungsfehler und $R_0$ der Sollkrümmungsradius (in mm) des Glasfensters ist. Insbesondere kann $R_0$ der Sollkrümmungsradius des Glasfensters an der Stelle des Glasfensters sein, an der der Steigungsfehler betrachtet wird.

In einer nicht zur Erfindung gehörenden Ausführungsform kann das Glasfenster einen Sollkrümmungsradius von $R_0$ = 42,5 mm haben. Zum Beispiel kann das Glasfenster einen Sollaußendurchmesser OD = 85 mm haben. In diesem Fall kann 50 % der Fläche des Glasfensters für Längenskalen über 15 mm, insbesondere für Längenskalen zwischen 15 mm und der Hälfte des Umfangs (U/2) in mm eines ringförmigen Glasfensters, einen geometrischen Steigungsfehler $SE_G$ von wenigstens 0,00011 haben, vorzugsweise von wenigstens 0,00029, bevorzugt von wenigstens 0,00057. Das Glasfenster kann in dieser Ausführungsform beispielsweise ein Glasring sein.

In einer Weiterbildung kann mindestens 50 % der Fläche des Glasfensters für Längenskalen über 15 mm, insbesondere für Längenskalen zwischen 15 mm und der Hälfte des Umfangs (U/2) in mm eines ringförmigen Glasfensters, einen geometrischen Steigungsfehler $SE_G$ haben, für den gilt:

$$-9{,}7 \cdot 10^{-7} \cdot 2 \cdot R_0 \ [1/mm] + 2{,}0 \cdot 10^{-4} < SE_G < -4{,}8 \cdot 10^{-5} \cdot 2 \cdot R_0 \ [1/mm] + 9{,}8 \cdot 10^{-3};$$

vorzugsweise

$$-2{,}4 \cdot 10^{-6} \cdot 2 \cdot R_0 \ [1/mm] + 4{,}9 \cdot 10^{-4} < SE_G < -2{,}4 \cdot 10^{-5} \cdot 2 \cdot R_0 \ [1/mm] + 4{,}9 \cdot 10^{-3};$$

bevorzugt

$$-4{,}8 \cdot 10^{-6} \cdot 2 \cdot R_0 \ [1/mm] + 9{,}8 \cdot 10^{-4} < SE_G < -9{,}7 \cdot 10^{-6} \cdot 2 \cdot R_0 \ [1/mm] + 2{,}0 \cdot 10^{-3},$$

wobei $SE_G$ der dimensionslose geometrische Steigungsfehler und $R_0$ der Sollkrümmungsradius (in mm) des Glasfensters ist. Insbesondere kann $R_0$ der Sollkrümmungsradius des Glasfensters an der Stelle des Glasfensters sein, an der der Steigungsfehler betrachtet wird.

In einer Weiterbildung kann mindestens 50 % der Fläche des Glasfensters für Längenskalen über 15 mm, insbesondere für Längenskalen zwischen 15 mm und der Hälfte des Umfangs (U/2) in mm eines ringförmigen Glasfensters, einen optischen Steigungsfehler SEo haben, für den gilt:

$$SE_O < -2{,}4 \cdot 10^{-5} \cdot 2 \cdot R_0 \ [1/mm] + 4{,}9 \cdot 10^{-3};$$

vorzugsweise

$$SE_O < -1{,}2 \cdot 10^{-5} \cdot 2 \cdot R_0 \ [1/mm] + 2{,}5 \cdot 10^{-3};$$

bevorzugt

$$SE_O < -4{,}8 \cdot 10^{-6} \cdot 2 \cdot R_0 \ [1/mm] + 9{,}8 \cdot 10^{-4},$$

wobei SEo der dimensionslose optische Steigungsfehler und $R_0$ der Sollkrümmungsradius (in mm) des Glasfensters ist. Insbesondere kann $R_0$ der Sollkrümmungsradius des Glasfensters an der Stelle des Glasfensters sein, an der der Steigungsfehler betrachtet wird.

In einer nicht zur Erfindung gehörenden Ausführungsform kann das Glasfenster einen Sollkrümmungsradius von $R_0$ = 42,5 mm haben. Zum Beispiel kann das Glasfenster einen Sollaußendurchmesser OD = 85 mm haben. In diesem Fall kann 50 % der Fläche des Glasfensters für Längenskalen über 15 mm, insbesondere für Längenskalen zwischen 15 mm und der Hälfte des Umfangs (U/2) in mm eines ringförmigen Glasfensters, einen optischen Steigungsfehler SEo von weniger als 0,0029 haben, vorzugsweise von weniger als 0,0014, bevorzugt von weniger als 0,00057. Das Glasfenster kann in dieser Ausführungsform beispielsweise ein Glasring sein.

In einer Weiterbildung kann der geometrische Steigungsfehler eine Untergrenze haben. So kann mindestens 50 % der Fläche des Glasfensters für Längenskalen über 15 mm, insbesondere für Längenskalen zwischen 15 mm und der Hälfte des Umfangs (U/2) in mm eines ringförmigen Glasfensters, einen optischen Steigungsfehler SEo haben, für den gilt:

$$SE_O > -4{,}8 \cdot 10^{-7} \cdot 2 \cdot R_0 \ [1/mm] + 9{,}8 \cdot 10^{-5};$$

vorzugsweise

$$SE_O > -1{,}2 \cdot 10^{-6} \cdot 2 \cdot R_0 \ [1/mm] + 2{,}5 \cdot 10^{-4};$$

bevorzugt

$$SE_O > -2{,}4 \cdot 10^{-6} \cdot 2 \cdot R_0 \ [1/mm] + 4{,}9 \cdot 10^{-4},$$

wobei SEo der dimensionslose optische Steigungsfehler und $R_0$ der Sollkrümmungsradius (in mm) des Glasfensters ist. Insbesondere kann $R_0$ der Sollkrümmungsradius des Glasfensters an der Stelle des Glasfensters sein, an der der Steigungsfehler betrachtet wird.

In einer nicht zur Erfindung gehörenden Ausführungsform kann das Glasfenster einen Sollkrümmungsradius von $R_0$ = 42,5 mm haben. Zum Beispiel kann das Glasfenster einen Sollaußendurchmesser OD = 85 mm haben. In diesem Fall kann 50 % der Fläche des Glasfensters für Längenskalen über 15 mm, insbesondere für Längenskalen zwischen 15 mm und der Hälfte des Umfangs (U/2) in mm eines ringförmigen Glasfensters, einen optischen Steigungsfehler SEo von wenigstens 0,000057 haben, vorzugsweise von wenigstens 0,00014, bevorzugt von wenigstens 0,00029.

Das Glasfenster kann in dieser Ausführungsform beispielsweise ein Glasring sein.

In einer Weiterbildung kann mindestens 50 % der Fläche des Glasfensters für Längenskalen über 15 mm, insbesondere für Längenskalen zwischen 15 mm und der Hälfte des Umfangs (U/2) in mm eines ringförmigen Glasfensters, einen optischen Steigungsfehler SEo haben, für den gilt:

$$-4{,}8 \cdot 10^{-7} \cdot 2 \cdot R_0\ [1/mm] + 9{,}8 \cdot 10^{-5} < SE_O < -2{,}4 \cdot 10^{-5} \cdot 2 \cdot R_0\ [1/mm] + 4{,}9 \cdot 10^{-3};$$

vorzugsweise

$$-1{,}2 \cdot 10^{-6} \cdot 2 \cdot R_0\ [1/mm] + 2{,}5 \cdot 10^{-4} < SE_O < -1{,}2 \cdot 10^{-5} \cdot 2 \cdot R_0\ [1/mm] + 2{,}5 \cdot 10^{-3};$$

bevorzugt

$$-2{,}4 \cdot 10^{-6} \cdot 2 \cdot R_0\ [1/mm] + 4{,}9 \cdot 10^{-4} < SE_O < -4{,}8 \cdot 10^{-6} \cdot 2 \cdot R_0\ [1/mm] + 9{,}8 \cdot 10^{-4},$$

wobei SEo der dimensionslose optische Steigungsfehler und $R_0$ der Sollkrümmungsradius (in mm) des Glasfensters ist. Insbesondere kann $R_0$ der Sollkrümmungsradius des Glasfensters an der Stelle des Glasfensters sein, an der der Steigungsfehler betrachtet wird.

In einer Weiterbildung kann mindestens 50 % der Fläche des Glasfensters für Längenskalen über 15 mm, insbesondere für Längenskalen zwischen 15 mm und der Hälfte des Umfangs (U/2) in mm eines ringförmigen Glasfensters, einen geometrischen Steigungsfehler von weniger als 0,004, vorzugsweise weniger als 0,003, weiter bevorzugt weniger als 0,0025, noch weiter bevorzugt weniger als 0,002 und/oder einen optischen Steigungsfehler von weniger als 0,002, vorzugsweise weniger als 0,0015, weiter bevorzugt weniger als 0,00125, noch weiter bevorzugt weniger als 0,001 haben. Insbesondere kann mindestens 50 % der Fläche des Glasfensters für Längenskalen über 15 mm, insbesondere für Längenskalen zwischen 15 mm und der Hälfte des Umfangs (U/2) in mm eines ringförmigen Glasfensters, einen geometrischen Steigungsfehler von wenigstens 0,0001, vorzugsweise wenigstens 0,0002, weiter bevorzugt wenigstens 0,0003 und/oder einen optischen Steigungsfehler von wenigstens 0,00005, vorzugsweise wenigstens 0,0001, weiter bevorzugt wenigstens 0,00015 haben.

Beispielsweise kann für den geometrischen Steigungsfehler in mindestens 50 % der Fläche des Glasfensters für Längenskalen über 15 mm, insbesondere für Längenskalen zwischen 15 mm und der Hälfte des Umfangs (U/2) in mm eines ringförmigen Glasfensters, folgender Zusammenhang gelten:

$$0 < (\Delta WT)/\Delta L < X,$$

wobei WT (engl.: wall thickness) die Wandstärke in mm und L eine Länge (z.B. den Umfang) in mm des Glasfensters bezeichnen und X eine Variable für die vorstehend definierten Werte ist. Insbesondere kann $X = 2 \cdot 10^{-3}$ sein.

Beispielsweise kann für den optischen Steigungsfehler in mindestens 50 % der Fläche des Glasfensters für Längenskalen über 15 mm, insbesondere für Längenskalen zwischen 15 mm und der Hälfte des Umfangs (U/2) in mm eines ringförmigen Glasfensters, eines ringförmigen Glasfensters, folgender Zusammenhang gelten:

$$0 < (n-1)*(\Delta WT)/\Delta L < X,$$

wobei WT (engl.: wall thickness) die Wandstärke in mm, L eine Länge (z.B. den Umfang) in mm und n den Brechungsindex des Glasfensters bezeichnen und X eine Variable für die vorstehend definierten Werte ist. Insbesondere kann $X = 1 \cdot 10^{-3}$ sein.

Vorzugsweise weist das Glasfenster den oder einen geringeren als den maximal tolerierten geometrischen Steigungsfehler und/oder den oder einen geringeren als den maximal tolerierten optischen Steigungsfehler für Längenskalen von über 15 mm, insbesondere für Längenskalen zwischen 15 mm und der Hälfte des Umfangs (U/2) in mm eines ringförmigen Glasfensters, in mindestens 60 % seiner Fläche auf, bevorzugt mindestens 70 %, weiter bevorzugt mindestens 80 %, noch weiter bevorzugt mindestens 90 %. Mit anderen Worten weist das Glasfenster die über den Steigungsfehler beschriebene hohe Oberflächenqualität und -güte in ausreichendem Maße in zumindest dem Teil des Glasfensters auf, der bei der Verwendung des Glasfensters in einem LiDAR-System von dem System aktiv genutzt wird. Dies ist insbesondere bei LiDAR-Systemen der Teil des Glasfensters, der von einem Laserlicht (emittiert und reflektiert) durchtreten wird.

Obgleich der geometrische und der optische Steigungsfehler für Längenskalen zwischen 15 mm und der Hälfte des Umfangs des Glasfensters (U/2) in mm die Signalqualität weniger stark beeinflusst als Steigungsfehler für Längenskalen zwischen 0,1 mm und 15 mm kann die Weiterbildung die optische Qualität und Systemleistung dennoch weiter verbessern.

Gemäß einer Ausführungsform kann das Glasfenster ein Ring oder ein Ringsegment sein. Mit anderen Worten kann das Glasfenster eine Ringform oder eine Ringsegmentform haben, also eine Hohlzylinderform oder eine Hohlzylindersegmentform. In diesem Fall kann zur Berechnung des Steigungsfehlers die Außenfläche eines mathematisch perfekten Rings mit durchgehend identischem Sollkrümmungsradius bzw. durchgehend identischem Sollaußendurchmesser als Referenzfläche dienen. Ein ringförmiges Glasfenster, insbesondere ein vollständig ringförmiges Glasfenster, kann beispielsweise für rotierende LiDAR-Systeme eingesetzt werden, in denen Emitter und Detektor innerhalb des Rings rotieren. Das Glasfenster kann aus mehreren gekrümmten Glasflächen zusammengesetzt sein. Insbesondere kann ein vollständiger Ring aus einem oder mehreren Ringsegmenten zusammengesetzt sein. Beispielsweise können drei 120° Ringsegmente zu einem 360° Ring zusammengesetzt sein. Es versteht sich, dass alternativ die gekrümmte Glasfläche, z.B. ein Ringsegment, als Glasfenster eingesetzt werden kann, insbesondere als LiDAR-Fenster.

Das Glasfenster kann einen Sollkrümmungsradius von wenigstens 50 mm, und/oder von maximal 200 mm haben. Der Sollkrümmungsradius kann insbesondere im Bereich zwischen 50mm und 200 mm liegen. Bei einem ringförmigen Glasfenster kann der Sollkrümmungsradius der Außendurchmesser des Glasfensters sein. Das Glasfenster kann eine Wandstärke von wenigstens 1,0 mm und/oder maximal 5 mm haben, vorzugsweise im Bereich zwischen 1,0 mm und 5 mm. Die Wandstärke kann von der Gesamtgröße des Glasfensters abhängen, wobei kleinere Glasfenster in der Regel eine geringere Dicke haben. Eine axiale Länge des Glasfensters kann wenigstens 15 mm und/oder maximal 200 mm betragen, insbesondere kann die Länge zwischen 20 mm und 200 mm sein. Das Glasfenster kann einen Mittelpunktswinkel zwischen 30° und 360° haben, vorzugsweise zwischen 60° und 270°, bevorzugt zwischen 90° und 120°. Beispielsweise können drei Ringsegmente mit einem Mittelpunktswinkel von 120° aus einem Ring hergestellt werden. Das Glasfenster kann hinsichtlich seiner Dimensionen an die Größe des LiDAR Systems angepasst sein, in dem das Glasfenster zum Einsatz kommen soll. Die vorstehenden Werte stellen in diesem Zusammenhang vorteilhafte Werte dar. Die vorstehenden Dimensionen und Maße können sich insbesondere auf Ausführungen des Glasfensters als Ring oder Ringsegment beziehen.

Vorzugsweise hält das Glasfenster die folgenden Toleranzen ein:

$$n = n_0 \pm 2.5 \, \%; \text{ und/oder}$$

$$OD = OD_0 \pm 1.0 \, \% \, (\text{bei WT fix}); \text{ und/oder}$$

$$OD = OD_0 \pm 0.2 \, \% \, (\text{bei ID fix}); \text{ und/oder}$$

$$ID = ID_0 \pm 0.2 \, \% \, (\text{bei OD fix}),$$

wobei n den tatsächlichen Brechungsindex, no den Soll-Brechungsindex, OD den tatsächlichen Außendurchmesser, $OD_0$ den Soll-Außendurchmesser, ID den tatsächlichen Innendurchmesser, $ID_0$ den Soll-Innendurchmesser und WT die tatsächliche Wandstärke beschreiben. OD kann gleich 2R und $OD_0$ gleich 2Ro sein. Die angegebenen Toleranzen definieren vorteilhafte Einparametertoleranzen, während die anderen Parameter als ideal angenommen werden.

Die vorstehenden geometrischen Parameter und Konturen sind messbar mit taktilen Sensoren, wie z.B. dem Messgerät: Zeiss O-Inspec.

In einer Weiterbildung kann mindestens 50 % der Fläche des Glasfensters, vorzugsweise mindestens 60 %, bevorzugt mindestens 70 %, weiter bevorzugt mindestens 80 %, noch weiter bevorzugt mindestens 90 %, eine RMS-Rauheit (eine sogenannte quadratische Rauheit) von weniger als 10 nm, vorzugsweise weniger als 7,5 nm, bevorzugt weniger als 5 nm aufweisen. Insbesondere kann die RMS-Rauheit weniger als 0,5 % der Arbeitswellenlänge betragen, also der Wellenlänge der in der jeweiligen Anwendung verwendeten relevanten Strahlung. In LiDAR-Systemen kann der Wert der RMS-Rauheit somit weniger als 0,5 % der Wellenlänge des verwendeten Laserlichts betragen (typischerweise 905 nm, 940 nm oder 1550 nm). Eine solche RMS-Rauheit kann die Oberflächenqualität und -güte des Glasfensters weiter erhöhen und somit die Signalqualität beim Einsatz in optischen Anwendungen wie LiDAR-Systemen zusätzlich verbessern. Die RMS-Rauheit (auch als Rauheit Rq bezeichnet) kann mittels Weißlichtinterferometrie gemessen werden, beispielsweise auf einer Fläche von 300 µm x 300 µm. Eine geringe RMS-Rauheit in den genannten Bereichen kann zum Beispiel erreicht werden durch Abtragen (z.B. Schleifen, Polieren, Ätzen) und/oder Auftragen (z.B. Beschichten von Unebenheiten) erfolgen, wobei Unebenheiten beispielsweise aufgrund von Ziehstreifen in der Oberfläche des Glasfensters vorhanden sein können. Die Rauheit kann nach DIN EN ISO 4287:2010 bestimmt werden.

In einer Ausführungsform kann das Glasfenster für sichtbares Licht, d.h. zumindest für Licht mit Wellenlängen zwischen 400 nm und 700 nm, im Wesentlichen opak sein und für Licht mit Arbeitswellenlängen (bspw. Laserlicht) im Wesentlichen transparent sein. Die Arbeitswellenlängen können im nahen infraroten Spektralbereich (NIR) liegen, beispielsweise in einem Arbeitswellenlängenbereich zwischen 780 nm und 3 μm. Eine Arbeitswellenlänge kann insbesondere bei 905 nm , bei 940 nm und/oder bei 1550 nm liegen. "Im Wesentlichen opak" kann bedeuten, dass das Glasfenster für Licht der hierzu genannten Wellenlängen eine durchschnittliche Transmission (T_ave) von weniger als oder gleich 10 %, vorzugsweise weniger als 7,5 %, bevorzugt weniger als 5 % hat. "Im Wesentlichen transparent" kann bedeuten, dass das Glasfenster für Licht der hierzu genannten Wellenlängen eine durchschnittliche Transmission (T_ave) von 90 % oder mehr hat, vorzugsweise von wenigstens 92 %, bevorzugt zwischen 92 % und 94 %.

Insbesondere kann das Glasfenster für Licht mit Wellenlängen von 700 nm oder kürzer im Wesentlichen opak sein. Vorzugsweise kann das Glasfenster im Wesentlichen opak sein für Wellenlängen bis maximal 80 %, vorzugsweise bis maximal 85 %, weiter bevorzugt bis maximal 90 % der Arbeitswellenlänge des in der jeweiligen Anwendung verwendeten Lichts (beispielsweise eines Laserlichts mit 905 nm, 940 nm oder 1550 nm Wellenlänge). Vorzugsweise kann das Glasfenster für Licht mit Wellenlängen von 800 nm oder mehr im Wesentlichen transparent sein, beispielsweise für Licht mit Wellenlängen zwischen 800 nm und 2500 nm, vorzugsweise zwischen 800 nm und 1600 nm, insbesondere zumindest für Laserlicht mit Wellenlängen von etwa 905 nm, etwa 940 nm und/oder etwa 1550 nm.

Das Glasfenster kann diese und weitere optische Eigenschaften und Ausbildungen zumindest in einem relevanten Bereich bzw. auf einer ausreichend großen Fläche von wenigstens 50 % haben, vorzugsweise wenigstens 60 %, bevorzugt wenigstens 70 %, weiter bevorzugt wenigstens 80 %, noch weiter bevorzugt wenigstens 90 %, noch weiter bevorzugt wenigstens 99 %.

Durch Ausbilden eines Glasfensters, das für bestimmte Wellenlängen im Wesentlichen opak und nur für andere bestimmte Wellenlängen im Wesentlichen transparent ist, kann sichergestellt werden, dass möglicherweise störende Wellenlängen im Betrieb geblockt werden und nicht in zum Detektor gelangen.

Zur Realisierung der opaken Eigenschaften des Glasfensters können verschiedene Weiterbildungen des Glasfensters separat oder in Kombination vorgesehen werden. So kann das Glasfenster in einer Ausführungsform zur Absorption von sichtbarem Licht mit einer für sichtbares Licht im Wesentlichen opaken und zumindest für Licht im Bereich der Arbeitswellenlängen (z.B. Laserlicht) im Wesentlichen transparenten Beschichtung versehen sein. Die Beschichtung kann organisch oder anorganisch sein. Die Beschichtung kann visuell schwarz sein. Die Beschichtung kann beispielsweise eine Tauchbeschichtung sein. Die Beschichtung kann insbesondere für sichtbares Licht mit Wellenlängen von 700 nm oder weniger im Wesentlichen opak sein. Vorzugsweise kann die Beschichtung für sichtbares Licht mit Wellenlängen von wenigstens 400 nm im Wesentlichen opak sein. Beispielsweise kann die Beschichtung wenigstens für sichtbares Licht mit Wellenlängen zwischen 400 nm und 700 nm im Wesentlichen opak sein. Die Beschichtung kann bevorzugt zumindest für Licht mit Wellenlängen von über 800 nm, insbesondere für Licht mit Wellenlängen von etwa 905 nm, etwa 940 nm und/oder von etwa 1550 nm, im Wesentlichen transparent sein.

Alternativ oder zusätzlich kann das Glasfenster zur Absorption von sichtbarem Licht mit einer für sichtbares Licht im Wesentlichen opaken, und zumindest für Licht im Bereich der Arbeitswellenlängen (z.B. Laserlicht) im Wesentlichen transparenten Folie versehen sein. Die Folie kann in ihrem Erscheinungsbild visuell dunkel, beispielsweise schwarz, sein. Beispielsweise kann die Folie ein schwarzer Polymerfilm sein. Die Folie kann insbesondere für sichtbares Licht mit Wellenlängen von 700 nm oder kürzer im Wesentlichen opak sein. Vorzugsweise kann die Folie für sichtbares Licht mit Wellenlängen von wenigstens 400 nm im Wesentlichen opak sein. Beispielsweise kann die Folie wenigstens für sichtbares Licht mit Wellenlängen zwischen 400 nm und 700 nm im Wesentlichen opak sein. Die Folie kann bevorzugt zumindest für Licht mit Wellenlängen von über 800 nm, insbesondere für Licht mit Wellenlängen von etwa 905 nm, etwa 940 nm und/oder von etwa 1550 nm, im Wesentlichen transparent sein.

Alternativ oder zusätzlich kann das Glasfenster im Volumen gefärbtes Glas ("Schwarzglas") umfassen.

Das Glasfenster kann mit einer oder mehreren weiteren Schicht/en versehen sein. Das Glasfenster kann eine Heizschicht umfassen. Eine Heizschicht kann zum Beispiel dazu dienen, Frost an dem Glasfenster zu entfernen. Das Glasfenster kann eine hydrophobe Schicht umfassen, die einen Wasserkontaktwinkel von mehr als 90° aufweist. Eine hydrophobe Schicht kann beispielsweise das Ablaufen von Flüssigkeitstropfen von dem Glasfenster verbessern. Das Glasfenster kann eine Kratzschutzschicht umfassen, um das Glasfenster vor mechanischen Beschädigungen zu schützen. Das Glasfenster kann eine hydrophile Schicht umfassen, die einen Wasserkontaktwinkel von weniger als 90° aufweist. Eine hydrophile Schicht kann beispielsweise dazu dienen, dass eine mit dem Glasfenster in Kontakt stehende Flüssigkeit einen uniformen Film an dem Glasfenster bildet.

Das Vorsehen von visuell schwarzen Bestandteilen des Glasfensters hat den weiteren Vorteil, dass der Einblick von außen in das System verhindert werden kann. Zudem können ggf. sensible Bestandteile des Systems, wie zum Beispiel Detektoren, vor Sonneneinstrahlung geschützt werden.

In den Ausführungsformen, in denen das Glasfenster mit einer zusätzlichen Beschichtung, Folie, Polymerschicht versehen ist, umfasst das Glasfenster also wenigstens zwei Schichten (Glas und weitere Schicht). Die erste Schicht bzw. das Glasmaterial kann dabei eine hohe optische Durchlässigkeit (z.B. von über 90 %) für sichtbares Licht und für Licht im Bereich der Arbeitswellenlängen haben, also beispielsweise eine optische Durchlässigkeit von über 90 % für Licht mit Wellenlängen bis wenigstens 1600 nm, vorzugsweise bis wenigstens 1000 nm, bevorzugt bis wenigstens 950 nm. Die erste Schicht kann die bevorzugte RMS-Rauheit haben, d.h. eine RMS-Rauheit von weniger als 10 nm, vorzugsweise weniger als 7,5 nm, bevorzugt weniger als 5 nm. Insbesondere kann die RMS-Rauheit der ersten Schicht weniger als 0,5 % der Arbeitswellenlänge betragen, also der Wellenlänge der in der jeweiligen Anwendung verwendeten relevanten Strahlung. In LiDAR-Systemen kann der Wert der RMS-Rauheit somit weniger als 0,5 % der Wellenlänge des verwendeten Laserlichts betragen (typischerweise 905 nm, 940 nm oder 1550 nm). Die zweite Schicht (z.B. Beschichtung, Folie oder Polymerschicht) kann die beschriebenen Eigenschaften einer geringen optischen Durchlässigkeit für sichtbares Licht und einer hohen optische Durchlässigkeit für Licht im Bereich der Arbeitswellenlängen haben. Die RMS-Rauheit der zweiten Schicht kann der RMS-Rauheit der ersten Schicht entsprechen.

Gemäß einer Weiterbildung kann das Glasfenster auf einer Innenseite (d.h. zum Beispiel einer dem Emitter und Detektor im Betrieb zugewandten Seite) und/oder einer Außenseite (d.h. zum Beispiel einer der Umgebung im Betrieb zugewandten Seite) mit einer Antireflexionsschicht versehen sein. Der Verbund aus dem Glasfenster und der/den Antireflexionsschicht/en kann hoch-transparent für die Arbeitswellenlängen sein, d.h. insbesondere im nahen infraroten Spektralbereich (NIR). Mit anderen Worten kann/können die Antireflexionsschicht/en Reflexionsverluste für Licht im Arbeitswellenlängenbereich an der Luft/Glas-Grenzfläche reduzieren und dadurch zu einer höheren Transmission von Licht im Arbeitswellenlängenbereich führen. Hierdurch kann Transmission von Licht im Arbeitswellenlängenbereich (z.B. von Laserstrahlen) durch das Glasfenster maximiert werden, sowohl in Bezug auf die Emission nach außen als auch in Bezug auf die Transmission von aus der Umgebung reflektierter Strahlung zurück zum Detektor. Beispielsweise kann durch eine/mehrere zusätzliche Antireflexionsschicht/en für die Arbeitswellenlängen eine durchschnittliche Transmission (T_ave) des Glasfensters von wenigstens 95 % (bei einer einseitigen Beschichtung), bevorzugt von wenigstens 98 % (insbesondere bei einer beidseitigen Beschichtung) erreicht werden. Es versteht sich, dass das Glasfenster ein Antireflexionsschichtsystem (AR-Schichtsystem) umfassen kann, das mehrere Antireflexionsschichten mit den vorstehenden Eigenschaften umfasst. Ein AR-Schichtsystem kann breitere Wellenlängenbereiche abdecken als einzelne AR-Schichten.

Gemäß einer Ausführungsform kann das Glasfenster Borosilicatglas, Aluminosilicatglas, wie z.B. Alkali-Aluminosilicatglas oder Erdalkali-Aluminosilicatglas umfassen.

Das Glas kann vorgespannt oder vorspannbar sein.

Bevorzugte Materialien des Glasfensters können die nachstehenden Zusammensetzungsbereiche in Gew.-% haben:

| Bestandteil | Gew.-% |
|---|---|
| $SiO_2$ | 55 bis 81 |
| $B_2O_3$ | 0 bis 15 |
| $Al_2O_3$ | 0 bis 25 |
| $R_2O$ | 0 bis 20 |
| RO | 0 bis 15 |

In einer Ausführungsform ist das Glas ausgewählt aus Borosilicatglas (z.B. mit hoher hydrolytischer Beständigkeit) und Aluminosilicatglas, wie beispielsweise borfreies und/oder alkalifreies Aluminosilicatglas, oder natriumhaltiges Aluminosilicatglas. Beispielhafte erfindungsgemäß verwendbare Zusammensetzungen sind der nachfolgenden Tabelle zu entnehmen.

| | Zusammensetzungsbereiche (Gew.-%) | | | | |
|---|---|---|---|---|---|
| | $SiO_2$ | $Al_2O_3$ | $B_2O_3$ | $R_2O$ | RO |
| Borosilicatglas mit hoher hxdrolytischer Beständigkeit ("Neutralgläser") | 70-81 | 1-10 | 6-14 | 0-10 | 0-5 |
| bor- und alkalifreies Aluminosilicatglas | 55-75 | 11-25 | 0 | 0-20 | |
| chem. vorspannbares hoch Na-haltiges Aluminosilicatglas | 64-78 | 4-14 | 0-4 | 0-14 | 0-15 |

"$R_2O$" meint Alkalimetalloxide ausgewählt aus $Li_2O$, $Na_2O$ und $K_2O$. "RO" meint Metalloxide ausgewählt aus MgO, ZnO, CaO, BaO und SrO.

In einer Ausführungsform weist das Glas einen Brechungsindex $n_d$ von wenigstens 1,450, insbesondere wenigstens 1,500 auf. Der Brechungsindex kann bis zu 1,750 oder bis zu 1,650 betragen.

Ein optionales chemisches Vorspannen unter Ionenaustausch wird beispielsweise durch Eintauchen in eine Kalium-haltige Salzschmelze durchgeführt. Es kann auch eine wässrige Kaliumsilikat-Lösung, -Paste oder -Dispersion eingesetzt oder ein Ionenaustausch durch Dampfabscheidung oder temperatur-aktivierte Diffusion durchgeführt werden. Das erstgenannte Verfahren ist in der Regel bevorzugt. Das chemische Vorspannen wird unter anderem durch die Parameter Druckspannung und Eindringtiefe charakterisiert:

Unter "Druckspannung" oder "Oberflächenspannung" (Compressive stress, CS) wird die Spannung verstanden, die aus dem Verdrängungseffekt auf das Glasnetzwerk durch die Glasoberfläche nach einem Ionenaustausch resultiert, während keine Deformation im Glas auftritt.

Unter "Eindringtiefe" oder "Tiefe der ionenausgetauschten Schicht" oder "Ionenaustauschtiefe" ("depth of layer" oder "depth of ion exchanged layer", DoL) wird die Dicke der Glasoberflächenschicht verstanden, wo Ionenaustausch auftritt und Druckspannung erzeugt wird. Die Druckspannung CS und die Eindringtiefe DoL können jeweils beispielsweise durch das kommerziell erhältliche Spannungsmessgerät FSM6000, basierend auf optischen Prinzipien, gemessen werden.

Der Ionenaustausch bedeutet daher, dass das Glas durch Ionenaustauschverfahren gehärtet bzw. chemisch vorgespannt wird, ein Verfahren, das dem Fachmann im Stand der Technik aus dem Bereich der Glasveredelung bzw. -verarbeitung gut bekannt ist. Das typische Salz, das für das chemische Vorspannen verwendet wird, ist beispielsweise $K^+$-haltiges geschmolzenes Salz oder Mischungen von Salzen. Herkömmlicherweise verwendete Salze umfassen $KNO_3$, $KCl$, $K_2SO_4$ oder $K_2Si_2O_5$; Additive, wie $NaOH$, $KOH$ und andere Natriumsalze oder Kaliumsalze werden ebenfalls verwendet, um die Rate des Ionenaustauschs für das chemische Vorspannen besser zu kontrollieren bzw. zu steuern.

In einer Weiterbildung kann das Glasfenster ein chemisch und/oder thermisch vorgespanntes Material umfassen. In dieser Weiterbildung kann eine Schichttiefe der Vorspannungsschicht (DOL, depth of layer) zwischen 10 $\mu$m und 100 $\mu$m ausgebildet sein, vorzugsweise zwischen 25 $\mu$m und 75 $\mu$m, bevorzugt von etwa 50 $\mu$m. Die Vorspannung kann wenigstens 100 MPa, vorzugsweise wenigstens 200 MPa, bevorzugt wenigstens 300 MPa betragen. Die Vorspannung kann unterhalb von 1500 MPa, beispielsweise unterhalb von 1000 MPa liegen. Die Vorspannung kann die mechanische Widerstandsfähigkeit des Glasfensters stark erhöhen. Chemische Vorspannung kann insbesondere durch Ionenaustausch von Natriumionen durch Kaliumionen oder von Lithiumionen durch Natrium- und/oder Kaliumionen erfolgen. Der Ionenaustausch kann durch Behandlung des Materials mit einem entsprechenden Salz bei erhöhter Temperatur stattfinden, etwa bei 350 bis 550°C, z.B. von 400 bis 480°C. Geeignete Salze sind z.B. Nitrate und Halogenide der betreffenden Ionen, z.B. $KNO_3$, $KCl$, $NaNO_3$, $NaCl$ und Mischungen daraus. Die Dauer der Behandlung richtet sich nach der gewünschten Schichttiefe. Die Dauer der Behandlung kann wenigstens 2 Stunden, wenigstens 4 Stunden oder wenigstens 5 Stunden betragen. Optional ist die Dauer auf höchstens 16 Stunden, höchstens 12 Stunden oder höchstens 8 Stunden begrenzt.

Ein weiterer nicht zur Erfindung gehörender Aspekt betrifft ein LiDAR-System, umfassend eine Laserlichtquelle zum Emittieren von Laserlicht, insbesondere mit einer Arbeitswellenlänge von 905 nm, 940 nm oder 1550 nm, eine Scaneinrichtung zum Umlenken des Laserlichts, eine Detektionseinrichtung zum Detektieren von reflektiertem Laserlicht und ein Glasfenster der vorstehend beschriebenen Art. Das Glasfenster kann in ein Gehäuse des LiDAR-Systems integriert sein.

Es versteht sich, dass das LiDAR-System noch weitere Komponenten umfasst, wie beispielsweise eine Linsenanordnung zum Bündeln, Umlenken, Ablenken, etc. des emittierten Lichts und/oder eine Auswertungseinrichtung.

Ein weiterer Aspekt der Erfindung betrifft ein Verfahren zum Herstellen eines Glasfensters für LiDAR-Systeme. Das Verfahren umfasst in beliebiger Reihenfolge die Schritte:

- Formen einer gekrümmten Glasfläche, insbesondere eines Glasrings und/oder eines Glasringsegments, für die Verwendung als Glasfenster;

- Schleifen und/oder Polieren zumindest eines Abschnitts der gekrümmten Glasfläche, um in mindestens 50 % der gekrümmten Glasfläche für Längenskalen zwischen 0,1 mm und 15 mm einen geometrischen Steigungsfehler von weniger als $-2{,}3 \cdot 10^{-6} \cdot 2 \cdot R_0$ [1/mm] $+ 7{,}3 \cdot 10^{-4}$ (d.h. $SE_G < -2{,}3 \cdot 10^{-6} \cdot 2 \cdot R_0$ [1/mm] $+ 7{,}3 \cdot 10^{-4}$), und vorzugsweise einen optischen Steigungsfehler von weniger als $-1{,}1 \cdot 10^{-6} \cdot 2 \cdot R_0$ [1/mm] $+ 3{,}6 \cdot 10^{-4}$ (d.h. $SE_O < -1{,}1 \cdot 10^{-6} \cdot 2 \cdot R_0$ [1/mm] $+ 3{,}6 \cdot 10^{-4}$), einzustellen.

In einer Ausführungsform kann das Verfahren die Schritte umfassen:

- Ziehen eines Glasrohres aus einer Glasschmelze;

- Schleifen und/oder Polieren zumindest eines Abschnitts des Glasrohres, um in mindestens 50 % der Fläche eines als Glasfenster verwendeten Abschnitts für Längenskalen zwischen 0,1 mm und 15 mm einen geometrischen Steigungsfehler von weniger als - $2,3\cdot10^{-6} \cdot 2\cdot R_0$ [1/mm] + $7,3\cdot10^{-4}$ (d.h. $SE_G < -2,3\cdot10^{-6} \cdot 2\cdot R_0$ [1/mm] + $7,3\cdot10^{-4}$), und vorzugsweise einen optischen Steigungsfehler von weniger als $-1,1\cdot10^{-6} \cdot 2\cdot R_0$ [1/mm] + $3,6\cdot10^{-4}$ (d.h. SEo < $-1,1\cdot10^{-6} \cdot 2\cdot R_0$ [1/mm] + $3,6\cdot10^{-4}$), einzustellen; und

- Schneiden des Glasrohres zum Erzeugen eines oder mehrerer Ringe einer vorbestimmten Länge, wobei der eine oder die mehreren Ringe vorzugsweise in Glassegmente (Ringsegmente) zerschnitten werden. Die Glassegmente können einen Mittelpunktswinkel zwischen 60° und 270° haben. Der/die Ring/e bzw. eines, mehrere oder alle der Glassegmente können dann als Glasfenster für LiDAR-Systeme verwendet werden.

In einer Ausführungsform kann das Verfahren die Schritte umfassen:

- Heißverformen eines Flachglases, um zumindest abschnittsweise ein gekrümmtes Glasfenster auszubilden, insbesondere in Form eines Ringsegments;

- Schleifen und/oder Polieren zumindest eines Abschnitts des gekrümmten Glasfensters bzw. des Ringsegments, um in mindestens 50 % der Fläche des gekrümmten Glasfensters bzw. des Ringsegments für Längenskalen zwischen 0,1 mm und 15 mm einen geometrischen Steigungsfehler von weniger als $-2,3\cdot10^{-6} \cdot 2\cdot R_0$ [1/mm] + $7,3\cdot10^{-4}$ (d.h. $SE_G < -2,3\cdot10^{-6} \cdot 2\cdot R_0$ [1/mm] + $7,3\cdot10^{-4}$), und vorzugsweise einen optischen Steigungsfehler von weniger als $-1,1\cdot10^{-6} \cdot 2\cdot R_0$ [1/mm] + $3,6\cdot10^{-4}$ (d.h. SEo < $-1,1\cdot10^{-6} \cdot 2\cdot R_0$ [1/mm] + $3,6\cdot10^{-4}$), einzustellen.

Das Ringsegment kann einen Mittelpunktswinkel zwischen 60° und 270° haben.

In einem optionalen weiteren Schritt kann die gekrümmte Glasfläche mit einem oder mehreren weiteren gekrümmten Glasflächen zu einem Glasfenster zusammengesetzt werden. Insbesondere kann ein Ringsegment mit einem oder mehreren weiteren Ringsegmenten zu einem vollständigen Ring verbunden werden, beispielsweise können drei 120° Ringsegmente zu einem 360° Ring zusammengesetzt werden. Es versteht sich, dass alternativ die gekrümmte Glasfläche, z.B. ein Ringsegment, als Glasfenster eingesetzt werden kann, insbesondere als LiDAR-Fenster.

In einer Ausführungsform kann das Glasrohr bzw. das Ringsegment derart in Geometrie und Oberfläche so nachverarbeitet werden (z.B. durch Schleifen und/oder Polieren), dass das Glasfenster den bevorzugten geometrischen Steigungsfehler und/oder den bevorzugten optischen Steigungsfehler in mindestens 60 % seiner Fläche nicht überschreitet, vorzugsweise in mindestens 70 %, bevorzugt in mindestens 80 %, weiter bevorzugt in mindestens 90 %.

Vorzugsweise kann durch die Nachbearbeitung für Längenskalen zwischen 0,1 mm und 15 mm ein geometrischer Steigungsfehler von $SE_G < -1,1\cdot10^{-6} \cdot 2\cdot R_0$ [1/mm] + $3,6\cdot10^{-4}$, bevorzugt von $SE_G < -6,8\cdot10^{-7} \cdot 2\cdot R_0$ [1/mm] + $2,2\cdot10^{-4}$, und/oder von $SE_G > -6,8\cdot10^{-8} \cdot 2\cdot R_0$ [1/mm] + $2,2\cdot10^{-5}$, vorzugsweise von $SE_G > -1,1\cdot10^{7} \cdot 2\cdot R_0$ [1/mm] + $3,6\cdot10^{-5}$, bevorzugt von $SE_G > -2,3\cdot10^{-7} \cdot 2\cdot R_0$ [1/mm] + $7,3\cdot10^{-5}$, vorgesehen werden.

Vorzugsweise kann durch die Nachbearbeitung für Längenskalen zwischen 0,1 mm und 15 mm ein geometrischer Steigungsfehler von weniger als 0,00040, bevorzugt weniger als 0,00035, weiter bevorzugt weniger als 0,00025 (= $2.5\cdot10^{-4}$), und/oder von wenigstens 0,00001, vorzugsweise wenigstens 0,000025, bevorzugt wenigstens 0,00004 vorgesehen werden.

Vorzugsweise kann durch die Nachbearbeitung für Längenskalen zwischen 0,1 mm und 15 mm ein optischer Steigungsfehler von $SE_O < -5,6\cdot10^{-7} \cdot 2\cdot R_0$ [1/mm] + $1,8\cdot10^{-4}$, bevorzugt SEo < $-3,4\cdot10^{-7} \cdot 2\cdot R_0$ [1/mm] + $1,1\cdot10^{-4}$, und/oder von $SE_O > -3,4\cdot10^{-8} \cdot 2\cdot R_0$ [1/mm] + $1,1\cdot10^{-5}$, vorzugsweise von SEo > $-5,6\cdot10^{-8} \cdot 2\cdot R_0$ [1/mm] + $1,8\cdot10^{-5}$, bevorzugt von $SE_O > -1,1\cdot10^{-7} \cdot 2\cdot R_0$ [1/mm] + $3,6\cdot10^{-5}$, vorgesehen werden.

Vorzugsweise kann durch die Nachbearbeitung für Längenskalen zwischen 0,1 mm und 15 mm ein optischer Steigungsfehler von weniger als 0,00020, bevorzugt weniger als 0,00018, weiter bevorzugt weniger als 0,00013 (= $1.3\cdot10^{-4}$), und/oder von wenigstens 0,00001, vorzugsweise wenigstens 0,000025, bevorzugt wenigstens 0,00004 vorgesehen werden.

In dieser Erfindung wird unter "Schleifen" ein Prozess verstanden, bei dem durch einen Materialabtrag die geometrische (langwellige) Form eines Werkzeuges mittels eines abrassiven Mediums (z.B. gebundenem Korn oder losem Korn) abgebildet wird. Unter "Polieren" versteht sich ein mechanischer und/oder thermo-mechanischer und/oder chemo-mechanischer Prozess, der die Kurzwelligen Eigenschaften der Oberfläche zielgerichtet verbessert. Dabei können je nach Qualitätsanforderungen beide Prozessschritte in Folge, oder auch jeweils alleine zum Einsatz kommen.

Dabei können die Verfahren in ihrer geometrischen Ausprägung je nach Produktgeometrie großflächig ausgelegt werden, so dass das Werkzeug bei der Bearbeitung einen Großteil der einzustellenden Fläche berührt. Dieser sollte bevorzugt 20% der Produktfläche darstellen. Alternativ sind auch lokal arbeitende Werkzeuge einsetzbar, die insbesondere bei mehrachsig gekrümmten Flächen eine hinreichend flächige Bearbeitung erlauben. Im Bereich optischer Elemente sind solche Prozesse als "zonales Polieren" bekannt.

Durch die Nachbearbeitung können eine Oberfläche einer Innenseite (d.h. zum Beispiel einer dem Emitter und Detektor im späteren Betrieb zugewandten Seite) und/oder eine Oberfläche einer Außenseite (d.h. zum Beispiel einer der Umgebung im späteren Betrieb zugewandten Seite) mit der gewünschten optischen Qualität versehen werden. Die Länge der Ringe, in die das Glasrohr geschnitten wird, kann eine in Bezug auf die Nachbearbeitung, insbesondere den Schleif- und/oder Polierprozess, optimierte Länge sein.

Durch das Schleifen und/oder Polieren des Glasrohrs bzw. des Ringsegments wird Oberflächenmaterial abgetragen, wodurch gleichzeitig eine optisch glatte Oberfläche mit einer RMS-Rauheit von weniger als 10 nm, vorzugsweise weniger als 7,5 nm, bevorzugt weniger als 5 nm vorgesehen werden kann. Insbesondere können durch das Schleifen und/oder Polieren Wanddickenschwankungen auf großen Längenskalen (mehrere Millimeter) und Ziehstreifen auf der Glasoberfläche eliminiert oder zumindest auf ein für die Anwendung nicht mehr bedeutende Maß reduziert werden, so dass besonders geringe Steigungsfehler verwirklicht werden können.

Zusätzlich beziehungsweise alternativ zu dem Schleifen und/oder Polieren, kann die Nachbearbeitung des Glasrohrs bzw. des Ringsegments durch Ätzen erfolgen, um die gewünschten Oberflächeneigenschaften und die gewünschte optische Qualität des Glasfensters zu erreichen.

Je nach Qualität des gezogenen Rohrs bzw. des heißgeformten Ringsegments können oder müssen durch Schleifprozesse und/oder sonstige Nachbearbeitungsprozesse weitere geometrische Parameter optimiert werden, beispielsweise der Außendurchmesser, der Innendurchmesser, die Konzentrizität, die Rundheit, etc.

In einer Weiterbildung des Verfahrens können die spektral-optischen Eigenschaften des Glasfensters (bzw. des Glasrohrs, des Rings oder des Ringsegments) mithilfe von Beschichtungen eingestellt werden.

Hierzu kann das Verfahren den weiteren Schritt des Aufbringens einer oder mehrerer Antireflexionsschicht/en (AR-Schicht) auf das Glasfenster umfassen, insbesondere auf die Außenseite des Glasfensters. Das Aufbringen der Antireflexionsschicht/en kann dazu führen, dass der Verbund aus dem Glasfenster und der/den Antireflexionsschicht/en hoch-transparent im nahen Infrarot (NIR) wird, insbesondere für die vorgesehenen Arbeitswellenlängen. Beispielsweise kann der Verbund einen Reflexionsgrad kleiner 4% aufweisen, vorzugsweise kleiner 3%, bevorzugt kleiner 2%, insbesondere für Arbeitswellenlängen im nahen infraroten Spektralbereich (NIR), beispielsweise für Arbeitswellenlängen von 905 nm, 940 nm oder 1550 nm. Mit anderen Worten kann/können die Antireflexionsschicht/en Reflexionsverluste für Licht im Arbeitswellenlängenbereich an der Luft/Glas-Grenzfläche reduzieren und dadurch zu einer höheren Transmission von Licht im Arbeitswellenlängenbereich führen. Die aufgebrachte Antireflexionsschicht kann ein Schichtsystem sein.

Zusätzlich oder alternativ kann das Verfahren den weiteren Schritt des Aufbringens einer oder mehrerer Schichten auf das Glasfenster umfassen, die für sichtbares Licht im Wesentlichen opak und für Licht im Bereich der Arbeitswellenlängen im Wesentlichen transparent sind. Insbesondere kann/können diese Schicht/en auf die Innenseite des Glasfensters aufgebracht werden. Die Schicht/en kann/können eine Beschichtung, eine auflaminierte Folie und/oder einer Polymerfläche (z.B. ein Polymerring/Polymerringsegment) sein. Die Schicht/en kann/können visuell schwarz und im nahen Infrarotspektrum (NIR) transparent sein. Eine im sichtbaren Spektralbereich undurchsichtige Schicht kann kosmetische Vorteile haben, da so in die optische Anwendung des LiDAR-Systems nicht hineingesehen werden kann, und kann technische Vorteile haben, da so Solarstrahlung an dem Eindringen in das LiDAR-System gehindert werden kann, sodass die Detektoren nicht geblendet und das zu erfassende Signal nicht gestört wird.

Obgleich einige der vorstehenden Merkmale, Effekte, Vorteile, Ausführungsformen und Weiterbildungen lediglich in Bezug auf das erfindungsgemäße Glasfenster beschrieben sind, gelten diese entsprechend für das erfindungsgemäße Verfahren sowie das erfindungsgemäße LiDAR-System und umgekehrt. Insbesondere kann das erfindungsgemäße Verfahren weitere Schritte umfassen, um die in Bezug auf das erfindungsgemäße Glasfenster beschriebenen Eigenschaften, Parameter und Werte vorzusehen.

## Kurzbeschreibung der Figuren

Ausführungsbeispiele der vorliegenden Erfindung werden nachstehend in Bezug auf die beiliegenden schematischen Figuren näher erläutert. Es stellen dar:

Fig. 1      eine schematische Darstellung eines Ausschnitts eines Glasfensters zur Erläuterung des geometrischen Steigungsfehlers.

Fig. 2      ein Diagramm mit Vergleichsmessungen zur Signalqualität bei der Verwendung von Glasfenstern des Standes der Technik und der Erfindung.

Fig. 3      eine beispielhafte Aufnahme einer Messung eines optischen Steigungsfehlers an einer Glasfläche.

## Figurenbeschreibung

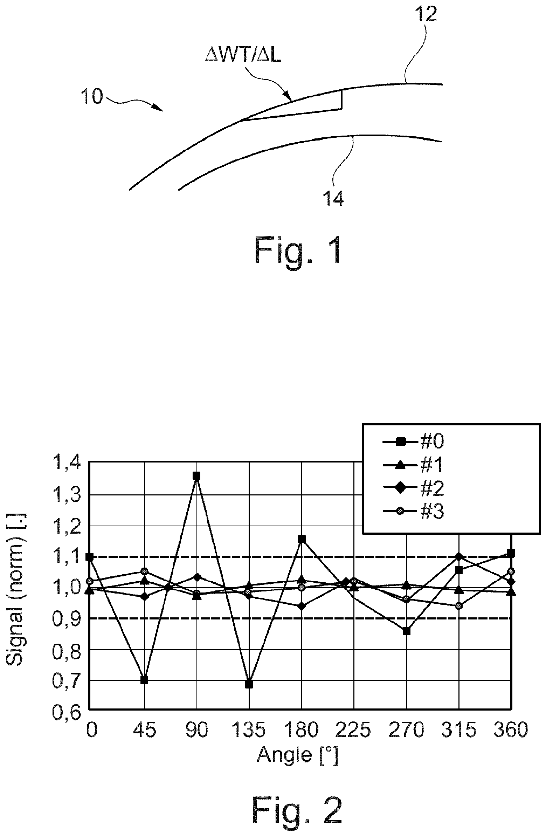

Fig. 1 zeigt einen schematischen Ausschnitt eines Glasfensters 10, der lediglich zur Veranschaulichung eines geometrischen Steigungsfehlers ΔWT/ΔL (engl.: Slope Error) dienen soll. So zeigt Fig. 1 zur besseren Übersicht lediglich eine einseitige Konturänderung an einer Außenseite. Es versteht sich jedoch, dass im Sinne der Erfindung für den Steigungsfehler eine Wanddickenänderung relevant ist, die sich durch Fehler bzw. Konturänderungen auf Außen- und Innenkontur gemeinsam ergibt.

Das Glasfenster 10 ist nach außen hin konvex gekrümmt. Zu erkennen sind eine erste Oberfläche 12 einer Außenseite des Glasfensters 10 und eine zweite Oberfläche 14 einer Innenseite des Glasfensters 10. Entlang einer Länge, hier des Umfangs, betrachtet weist das Glasfenster 10 eine Wanddickenschwankung bzw. Wanddickenänderung auf. Durch die Änderung der Wanddicke (WT) über einen Längen- bzw. hier Umfangsabschnitt einer bestimmten Längenskala ($\Delta L$) weist das Glasfenster in diesem Abschnitt eine lokale Steigungsabweichung von einer idealen Sollkrümmung auf.

Die Erfinder der vorliegenden Erfindung haben erkannt, dass ein Steigungsfehler in einem Glasfenster, insbesondere oberhalb einer bestimmten Obergrenze, erhebliche negative Auswirkungen auf die Verwendung des Glasfensters in LiDAR-Systemen hat. Durch die vorliegende Erfindung wird ein Glasfenster bereitgestellt, das für den Einsatz in LiDAR-Systemen geeignet ist und insbesondere eine Signalschwankung minimiert und innerhalb einer ausreichenden Toleranzbreite von +/- 10 % hält.

Ein Vergleich von experimentell ermittelten Signalschwankung bei der Verwendung von drei Glasfenstern gemäß Ausführungsformen der Erfindung und einem Glasfenster des Standes der Technik in einem LiDAR-System ist in Fig. 2 gezeigt. Das Glasfenster des Standes der Technik ist in der Legende der Fig. 2 als #0 bezeichnet, während die Glasfenster der drei Ausführungsformen der Erfindung in der Legende der Fig. 2 als #1, #2 und #3 bezeichnet sind. Das mit #0 bezeichnete Glasfenster des Standes der Technik war hier ein Glasring aus einem gezogenen Glasrohr.

In Fig. 2 ist zu erkennen, dass das ermittelte LiDAR-Signal bei der Verwendung des Glasfensters (Glasrings) des Standes der Technik etwa um +/- 30 % um einen Mittelwert schwankte. Eine solch starke Schwankung liegt außerhalb einer als angemessen erachteten Toleranzbreite von etwa +/- 10 %, weshalb das Glasfenster des Standes der Technik für einen Einsatz in einem LiDAR-System nicht geeignet ist. Der als angemessen erachtete Toleranzbereich ist in Fig. 2 durch strichlierte Linien begrenzt.

Im Gegensatz zu dem Glasfenster des Standes der Technik, zeigen die ermittelten Messergebnisse, dass die ermittelten LiDAR-Signal bei der Verwendung von Glasfenstern (Glasringen) gemäß Ausführungsformen der Erfindung um maximal +/- 10 % schwanken. Bei einem Einsatz eines erfindungsgemäßen Glasfensters in einem LiDAR-System liegen die LiDAR-Signale somit innerhalb der Toleranzbreite von etwa +/- 10 %. Somit sind die erfindungsgemäßen Glasfenster für einen Einsatz in LiDAR-Systemen geeignet und überwinden dabei die Nachteile von Polymerfenstern.

Die Schwankungen des ermittelten LiDAR-Signals können auch über die Standardabweichung vom Mittelwert ausgedrückt werden, was in der nachstehenden Tabelle dargestellt ist:

| Standardabweichung | |
|---|---|
| Glasring des Standes der Technik | 0,22 |
| Erfindungsgemäßer Glasring der ersten Ausführungsform | 0,02 |
| Erfindungsgemäßer Glasring der zweiten Ausführungsform | 0,05 |
| Erfindungsgemäßer Glasring der dritten Ausführungsform | 0,04 |

**Beispiele**

Ein erstes Beispiel einer Ausführungsform eines erfindungsgemäßen Glasfensters hat die Form eines vollständigen Rings (360°) mit einem Sollaußendurchmesser von 85 mm und einer Sollwandstärke von 2,0 mm. Ein zweites Beispiel einer weiteren Ausführungsform eines erfindungsgemäßen Glasfensters hat die Form eines vollständigen Rings (360°) mit einem Sollaußendurchmesser von 135 mm und einer Sollwandstärke von 2,0 mm. Das Glasfenster ist in beiden Beispielen für die Verwendung in einem LiDAR-System mit einem Laser einer Arbeitswellenlänge von 905 nm vorgesehen und weist die folgenden Maße und Parameter auf:

| Eigenschaften und Parameterwerte des erfindungsgemäßen Glasrings | | |
|---|---|---|
| | 1. Beispiel | 2. Beispiel |
| $OD_0$ bzw. $2R_0$ [mm] | 85,00 | 135,00 |
| OD [mm] mit WT = konstant | 85,00 ± 1,00 | 135,00 ± 1,50 |

(fortgesetzt)

| Eigenschaften und Parameterwerte des erfindungsgemäßen Glasrings | | |
|---|---|---|
| | 1. Beispiel | 2. Beispiel |
| OD [mm] mit ID = konstant | 85,00 $\pm$ 0,20 | 135,00 $\pm$ 0,30 |
| WT [mm] mit ID = konstant | 2,00 $\pm$ 0,10 | 2,00 $\pm$ 0,15 |
| WT [mm] mit OD = konstant | 2,00 $\pm$ 0,10 | 2,00 $\pm$ 0,15 |
| ID [mm] mit OD = konstant | 81,00 $\pm$ 0,20 | 131,00 $\pm$ 0,30 |
| n | 1.5089 $\pm$ 0,04 | 1.5089 $\pm$ 0,04 |
| RMS-Rauheit [nm] (Oberflächen der Innen- und Außenseiten) | < 5 | < 5 |
| Max. $SE_G$ für Längenskalen zwischen 0,1 mm und 15 mm | 0,0005 | 0,0004 |
| Max $SE_G$ für Längenskalen über 15 mm | 0,0057 | 0,0033 |

wobei OD den tatsächlichen Außendurchmesser, $OD_0$ den Soll-Außendurchmesser, ID den tatsächlichen Innendurchmesser, $ID_0$ den Soll-Innendurchmesser, WT die tatsächliche Wandstärke, n den Brechungsindex und $SE_G$ den geometrischen Steigungsfehler beschreiben. Wie angegeben sind die Toleranzen Einparametertoleranzen, bei denen die anderen angegebenen Parameter als ideal angenommen werden.

Das Material des erfindungsgemäßen Glasfensters ist in diesem Ausführungsbeispiel DURAN®-Glas mit einer annähernden Zusammensetzung (in Gew. %) von:

| $SiO_2$ | $B_2O_3$ | $Na_2O + K_2O$ | $Al_2O_3$ |
|---|---|---|---|
| 81 | 13 | 4 | 2 |

Die RMS-Rauheit, der geometrische Steigungsfehler und der optische Steigungsfehler sind mittels einer Nachbearbeitung durch Schleifen und Polieren des Glasrings auf der Innen- und Außenseite eingestellt worden.

Der geometrische und der optische Steigungsfehler wurden mit dem Messgerät "Zygo Verifire" und der Software "MX Software" der Firma Zygo gemessen.

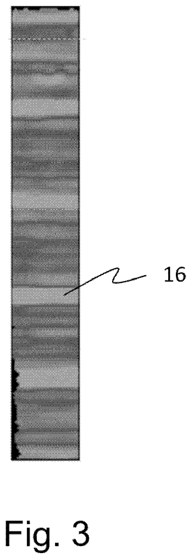

Eine beispielhafte Aufnahme einer Messung des optischen Steigungsfehlers an einer Glasfläche ist in Fig. 3 gezeigt. Der in dieser Aufnahme höchste gemessene optische Steigungsfehler SEo liegt im Bereich 16 vor und beträgt hier 0,0004 für Längenskalen zwischen 0,1 mm und 15 mm.

Bezugszeichenliste

10 Glasfenster
12 erste Oberfläche
14 zweite Oberfläche
16 Bereich mit dem höchsten optischen Steigungsfehler

**Patentansprüche**

1. Glasfenster für LiDAR-Systeme, wobei das Glasfenster eine gekrümmte Form aufweist, **dadurch gekennzeichnet, dass** mindestens 50 % der Fläche des Glasfensters für Längenskalen zwischen 0,1 mm und 15 mm einen geometrischen Steigungsfehler $SE_G$ hat, für den gilt:

$$SE_G < -2,3 \cdot 10^{-6} \cdot 2 \cdot R_0 \; [1/\text{mm}] + 7,3 \cdot 10^{-4},$$

wobei $R_0$ der Sollkrümmungsradius in mm des Glasfensters ist.

2. Glasfenster nach Anspruch 1, wobei mindestens 50 % der Fläche des Glasfensters für Längenskalen zwischen 0,1 mm und 15 mm einen geometrischen Steigungsfehler von weniger als 0,00050 hat.

3. Glasfenster nach Anspruch 1 oder 2, wobei mindestens 50 % der Fläche des Glasfensters für Längenskalen zwischen 0,1 mm und 15 mm einen optischen Steigungsfehler SEo hat, für den gilt:

$$SE_O < -1,1 \cdot 10^{-6} \cdot 2 \cdot R_0 \; [1/\text{mm}] + 3,6 \cdot 10^{-4}.$$

4. Glasfenster nach einem der vorangehenden Ansprüche, wobei mindestens 50 % der Fläche des Glasfensters für Längenskalen zwischen 0,1 mm und 15 mm einen optischen Steigungsfehler von weniger als 0,00025 hat.

5. Glasfenster nach einem der vorangehenden Ansprüche, wobei mindestens 50 % der Fläche des Glasfensters für Längenskalen über 15 mm

   einen geometrischen Steigungsfehler $SE_G$ hat, für den gilt: $SE_G < -4,8 \cdot 10^{-1} \cdot 2 \cdot R_0 \; [1/\text{mm}] + 9,8 \cdot 10^{-3}$; und/oder einen optischen Steigungsfehler SEo hat, für den gilt: $SEo < -2,4 \cdot 10^{-5} \cdot 2 \cdot R_0 \; [1/\text{mm}] + 4,9 \cdot 10^{-3}$.

6. Glasfenster nach einem der vorangehenden Ansprüche, wobei das Glasfenster ein Ring oder ein Ringsegment ist.

7. Glasfenster nach einem der vorangehenden Ansprüche, wobei der Sollkrümmungsradius zwischen 50 mm und 200 mm ist und/oder das Glasfenster eine Wandstärke zwischen 1 mm und 5 mm und/oder eine axiale Länge zwischen 20 mm und 200 mm und/oder einen Mittelpunktswinkel zwischen 30° und 360° aufweist.

8. Glasfenster nach einem der vorangehenden Ansprüche, wobei mindestens 50 % der Fläche des Glasfensters eine quadratische Rauheit von weniger als 10 nm aufweist.

9. Glasfenster nach einem der vorangehenden Ansprüche, wobei das Glasfenster für sichtbares Licht in einem Wellenlängenbereich zwischen 400 nm und 700 nm eine durchschnittliche Transmission von weniger als 10 % hat und für Licht mit Arbeitswellenlängen im nahen infraroten Spektralbereich, eine durchschnittliche Transmission von 90 % oder mehr hat.

10. Glasfenster nach Anspruch 9, wobei das Glasfenster zur Absorption von sichtbarem Licht mit einer Beschichtung versehen ist, die für sichtbares Licht in einem Wellenlängenbereich zwischen 400 nm und 700 nm eine durchschnittliche Transmission von weniger als 10 % hat und für Licht mit Arbeitswellenlängen im nahen infraroten Spektralbereich, eine durchschnittliche Transmission von 90 % oder mehr hat.

11. Glasfenster nach Anspruch 9 oder 10, wobei das Glasfenster zur Absorption von sichtbarem Licht mit einer Folie verbunden ist, die für sichtbares Licht in einem Wellenlängenbereich zwischen 400 nm und 700 nm eine durchschnittliche Transmission von weniger als 10 % hat und für Licht mit Arbeitswellenlängen im nahen infraroten Spektralbereich, eine durchschnittliche Transmission von 90 % oder mehr hat.

12. Glasfenster nach einem der Ansprüche 9 bis 11, wobei das Glasfenster Schwarzglas umfasst.

13. Glasfenster nach einem der vorangehenden Ansprüche, wobei das Glasfenster auf einer Innenseite und/oder einer Außenseite mit einer Antireflexionsschicht versehen ist.

14. Glasfenster nach einem der vorangehenden Ansprüche, wobei das Glasfenster Borosilicatglas oder Aluminosilicatglas, Erdalkali-Aluminosilicatglas oder alkalifreies Aluminosilicatglas umfasst.

15. Glasfenster nach einem der vorangehenden Ansprüche, wobei das Glasfenster ein chemisch und/oder thermisch vorgespanntes Material umfasst.

16. Verfahren zum Herstellen eines Glasfensters für LiDAR-Systeme nach einem der Ansprüche 1 bis 15, wobei das Verfahren den Schritt umfasst:

   - Formen einer gekrümmten Glasfläche zur Verwendung als Glasfenster; und **gekennzeichnet ist durch** den Schritt:

   - Schleifen und/oder Polieren zumindest eines Abschnitts der gekrümmten Glasfläche, um in mindestens 50 % der gekrümmten Glasfläche für Längenskalen zwischen 0,1 mm und 15 mm einen geometrischen Steigungsfehler $SE_G$ von $SE_G < -2{,}3 \cdot 10^{-6} \cdot 2 \cdot R_0$ [1/mm] + $7{,}3 \cdot 10^{-4}$, einzustellen,

   wobei $R_0$ der Sollkrümmungsradius in mm des Glasfensters ist.

17. Verfahren nach Anspruch 16, wobei in dem Schritt des Schleifens und/oder Polierens in mindestens 50 % der gekrümmten Glasfläche für Längenskalen zwischen 0,1 mm und 15 mm ein geometrischer Steigungsfehler von weniger als 0,00050, eingestellt wird.

18. Verfahren nach Anspruch 16 oder 17, wobei der Schritt des Formens der gekrümmten Glasfläche umfasst:

   Ziehen eines Glasrohres aus einer Glasschmelze; oder
   Heißverformen eines Flachglases.

19. Verfahren nach einem der Ansprüche 16 bis 18, das ferner den Schritt umfasst: Aufbringen einer oder mehrerer Antireflexionsschicht/en auf die gekrümmte Glasfläche.

20. Verfahren nach einem der Ansprüche 16 bis 19, das ferner den Schritt umfasst: Aufbringen einer oder mehrerer Schichten auf die gekrümmte Glasfläche, die für sichtbares Licht im Wesentlichen opak und für Licht mit Arbeitswellenlängen im nahen infraroten Spektralbereich im Wesentlichen transparent ist/sind.

## Claims

1. Glass window for LiDAR systems, wherein the glass window has a curved shape,
   **characterized in that**
   at least 50% of the surface area of the glass window has a geometric slope error $SE_G$ for length scales between 0.1 mm and 15 mm for which:

$$SE_G < -2.3 \cdot 10^{-6} \cdot 2 \cdot R_0 \ [1/mm] + 7.3 \cdot 10^{-4}$$

   wherein $R_0$ is the nominal radius of curvature in mm of the glass window.

2. Glass window according to claim 1, wherein at least 50% of the surface area of the glass window has a geometric slope error of less than 0.00050 for length scales between 0.1 mm and 15 mm.

3. Glass window according to claim 1 or 2, wherein at least 50% of the surface area of the glass window has an optical slope error $SE_o$ for which:

$$SE_O < -1.1 \cdot 10^{-6} \cdot 2 \cdot R_0 \ [1/mm] + 3.6 \cdot 10^{-4}.$$

4. Glass window according to any one of the preceding claims, wherein at least 50% of the surface area of the glass window has an optical slope error of less than 0.00025 for length scales between 0.1 mm and 15 mm.

5. Glass window according to any one of the preceding claims, wherein at least 50% of the surface area of the glass window has a geometric slope error $SE_G$ for length scales above 15 mm for which:

$$SE_G < -4.8 \cdot 10^{-5} \cdot 2 \cdot R_0 \ [1/mm] + 9.8 \cdot 10^{-3},$$

and/or has an optical slope error SEo for which:

$$SE_O < -2.4 \cdot 10^{-5} \cdot 2 \cdot R_0 \text{ [1/mm]} + 4.9 \cdot 10^{-3}.$$

6. Glass window according to any one of the preceding claims, wherein the glass window is a ring or a ring segment.

7. Glass window according to any one of the preceding claims, wherein the nominal radius of curvature is between 50 mm and 200 mm and/or the glass window has a wall thickness between 1 mm and 5 mm and/or an axial length between 20 mm and 200 mm and/or a center angle between 30° and 360°.

8. Glass window according to any one of the preceding claims, wherein at least 50% of the surface area of the glass window has a root mean square roughness of less than 10 nm.

9. Glass window according to any one of the preceding claims, wherein the glass window has an average transmission of less than 10% for visible light in a wavelength range between 400 nm and 700 nm, and has an average transmission of 90% or more for light with operating wavelengths in the near infrared spectral range.

10. Glass window according to claim 9, wherein the glass window for absorbing visible light is provided with a coating which has an average transmission of less than 10% for visible light in a wavelength range between 400 nm and 700 nm, and has an average transmission of 90% or greater for light with operating wavelengths in the near infrared spectral range.

11. Glass window according to claim 9 or 10, wherein the glass window for absorbing visible light is bonded to a film which has an average transmission of less than 10% for visible light in a wavelength range between 400 nm and 700 nm, and has an average transmission of 90% or more for light with operating wavelengths in the near infrared spectral range.

12. Glass window according to any one of claims 9 to 11, wherein the glass window comprises black glass.

13. Glass window according to any one of the preceding claims, wherein the glass window is provided with an anti-reflective layer on an inner side and/or an outer side.

14. Glass window according to any one of the preceding claims, wherein the glass window comprises borosilicate glass or aluminosilicate glass, alkaline earth aluminosilicate glass or alkali-free aluminosilicate glass.

15. Glass window according to any one of the preceding claims, wherein the glass window comprises a chemically and/or thermally toughened material.

16. Method of producing a glass window for LiDAR systems according to any one of claims 1 to 15, wherein the method comprises the steps of:

forming a curved glass surface for use as a glass window; and
is **characterized by** the step of:

grinding and/or polishing at least a portion of the curved glass surface to set a geometric slope error $SE_G$ of $SE_G < -2.3 \cdot 10^{-6} \cdot 2 \cdot R_0$ [1/mm] $+ 7.3 \cdot 10^{-4}$ in at least 50% of the curved glass surface for length scales between 0.1 mm and 15 mm,
wherein $R_0$ is the nominal radius of curvature in mm of the glass window.

17. Method according to claim 16, wherein in the step of grinding and/or polishing a geometric slope error of less than 0.00050 is set in at least 50% of the curved glass surface for length scales between 0.1 mm and 15 mm.

18. Method according to claim 16 or 17, wherein said step of forming the curved glass surface comprises:

drawing a glass tube from a molten glass; or
hot forming a flat glass.

**19.** Method according to any one of claims 16 to 18, further comprising the step of applying one or more anti-reflective layer(s) onto the curved glass surface.

**20.** Method according to any one of claims 16 to 19, further comprising the step of applying one or more layers that are substantially opaque to visible light and substantially transparent to light having operating wavelengths in the near-infrared spectral range onto the curved glass surface.

**Revendications**

**1.** Fenêtre vitrée destinée à des systèmes LiDAR, la fenêtre vitrée ayant une forme incurvée, **caractérisée en ce qu'**au moins 50 % de la surface de la fenêtre vitrée présente pour des échelles de longueur comprises entre 0,1 mm et 15mm une erreur de pente géométrique $SE_G$ pour laquelle on a :

$$SE_G < -2,3*10^{-6}*2*R_0 \ [1/mm] + 7,3*10^{-4},$$

$R_0$ étant le rayon de courbure nominal en mm de la fenêtre vitrée.

**2.** Fenêtre vitrée selon la revendication 1, dans laquelle au moins 50 % de la surface de la fenêtre vitrée présente pour des échelles de longueur comprises entre 0,1 mm et 15mm une erreur de pente géométrique inférieure à 0,00050.

**3.** Fenêtre vitrée selon la revendication 1 ou 2, dans laquelle au moins 50 % de la surface de la fenêtre vitrée présente, pour des échelles de longueur comprises entre 0,1 mm et 15 mm, une erreur de pente optique SEo pour laquelle on a :

$$SE_O < -1,1*10^{-6}*2*R_0 \ [1/mm] + 3,6*10^{-4}.$$

**4.** Fenêtre vitrée selon l'une des revendications précédentes, dans laquelle au moins 50 % de la surface de la fenêtre vitrée présente une erreur de pas optique inférieure à 0,00025 pour des échelles de longueur comprises entre 0,1 mm et 15 mm.

**5.** Fenêtre vitrée selon l'une des revendications précédentes, dans laquelle au moins 50 % de la surface de la fenêtre vitrée présente pour des échelles de longueur supérieures à 15 mm

une erreur de pente géométrique $SE_G$ pour laquelle on a : $SEG < -4,8*10^{-5}*2*R_0 \ [1/mm] + 9,8*10^{-3}$ et/ou
une erreur de pente optique SEo pour laquelle on a : $SE_O < -2,4*10^{-5}*2*R_0 \ [1/mm] + 4,9*10^{-3}$.

**6.** Fenêtre vitrée selon l'une des revendications précédentes, dans laquelle la fenêtre vitrée étant un anneau ou un segment d'anneau.

**7.** Fenêtre vitrée selon l'une des revendications précédentes, dans laquelle le rayon de courbure nominal est compris entre 50 mm et 200 mm et/ou la fenêtre vitrée a une épaisseur de paroi comprise entre 1 mm et 5 mm et/ou une longueur axiale comprise entre 20 mm et 200 mm et/ou un angle au centre compris entre 30° et 360°.

**8.** Fenêtre vitrée selon l'une des revendications précédentes, dans laquelle au moins 50 % de la surface de la fenêtre vitrée présente une rugosité quadratique inférieure à 10 nm.

**9.** Fenêtre vitrée selon l'une des revendications précédentes, dans laquelle la fenêtre vitrée présente une transmission moyenne inférieure à 10 % pour une lumière visible dans une gamme de longueurs d'onde comprise entre 400 nm et 700 nm et une transmission moyenne de 90 % ou plus pour une lumière ayant des longueurs d'onde de travail dans le domaine spectral du proche infrarouge.

**10.** Fenêtre vitrée selon la revendication 9, dans laquelle pour l'absorption de la lumière visible, la fenêtre vitrée est pourvue, d'un revêtement qui présente une transmission moyenne inférieure à 10 % pour la lumière visible dans une gamme de longueurs d'onde comprise entre 400 nm et 700 nm et une transmission moyenne de 90 % ou plus pour la lumière ayant des longueurs d'onde de travail dans le domaine spectral du proche infrarouge.

**11.** Fenêtre vitrée selon la revendication 9 ou 10, dans laquelle, pour l'absorption de la lumière visible, la fenêtre vitrée est reliée à un film qui présente une transmission moyenne inférieure à 10 % pour la lumière visible dans une gamme de longueurs d'onde comprise entre 400 nm et 700 nm et une transmission moyenne de 90 % ou plus pour la lumière ayant des longueurs d'onde de travail dans la gamme spectrale du proche infrarouge.

**12.** Fenêtre vitrée selon l'une des revendications 9 à 11, dans laquelle la fenêtre vitrée comprend du verre de Wood.

**13.** Fenêtre vitrée selon l'une des revendications précédentes, dans laquelle la fenêtre vitrée est pourvue d'une couche antireflet sur un côté intérieur et/ou un côté extérieur.

**14.** Fenêtre vitrée selon l'une des revendications précédentes, dans laquelle la fenêtre vitrée comprend du verre au borosilicate ou du verre à l'aluminosilicate, du verre à l'aluminosilicate d'alcalino-terreux ou du verre à l'aluminosilicate sans alcalin.

**15.** Fenêtre vitrée selon l'une des revendications précédentes, dans laquelle la fenêtre vitrée comprend un matériau trempé chimiquement et/ou thermiquement.

**16.** Procédé de fabrication d'une fenêtre vitrée destinée à des systèmes LiDAR selon l'une des revendications 1 à 15, le procédé comprenant l'étape suivante :

- former une surface de verre incurvée destinée à être utilisée comme fenêtre vitrée ; et **caractérisé par** l'étape suivante :
- former et/ou polir au moins une portion de la surface de verre incurvée afin d'ajuster une erreur de pas géométrique $SE_G$ de $SE_G < -2,3*10^{-6}*2*R_0$ [1/mm] $+ 7,3*10^{-4}$ dans au moins 50 % de la surface de verre incurvée pour des échelles de longueur comprises entre 0,1 mm et 15 mm,

$R_0$ étant le rayon de courbure nominal en mm de la fenêtre vitrée.

**17.** Procédé selon la revendication 16, dans lequel une erreur de pas géométrique inférieure à 0,00050 est ajustée à l'étape de meulage et/ou de polissage dans au moins 50 % de la surface de verre incurvée pour des échelles de longueur comprises entre 0, 1 mm et 15 mm.

**18.** Procédé selon la revendication 16 ou 17, dans lequel l'étape de formation de la surface de verre incurvée comprend l'étape suivante :

étirer un tube de verre à partir d'un verre fondu ; ou
former à chaud un verre plat.

**19.** Procédé selon l'une des revendications 16 à 18, qui comprend en outre l'étape suivante : appliquer un ou plusieurs revêtements antireflets sur la surface de verre incurvée.

**20.** Procédé selon l'une des revendications 16 à 19, qui comprend en outre l'étape suivante : appliquer sur la surface de verre incurvée une ou plusieurs couches qui sont sensiblement opaques à la lumière visible et sensiblement transparentes à une lumière ayant des longueurs d'onde de travail dans le domaine spectral proche infrarouge.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019030106 A1
- WO 2019009336 A1
- US 2017248691 A1
- DE 202016008528 U1
- DE 10112935 A1